# EUROPÄISCHE PATENTSCHRIFT

(11) **EP 2 780 389 B1**
(45) Veröffentlichungstag und Bekanntmachung des Hinweises auf die Patenterteilung: **25.03.2015**
(21) Anmeldenummer: 12787655.5
(22) Anmeldetag: 15.11.2012
(51) Int. Cl.: C08G 63/00, C11D 3/00, B01F 17/00, C09D 7/02

(54) **FESTE AMINADDUKTE**
SOLID AMINO ADDITION PRODUCTS
DES PRODUITS D'ADDITION D'AMINE SOLIDES

(30) Priorität: 18.11.2011 EP 11009170
(43) Veröffentlichungstag der Anmeldung: 24.09.2014
(73) Patentinhaber: BYK-Chemie GmbH, 46483 Wesel (DE)
(72) Erfinder: PRITSCHINS, Wolfgang, 46487 Wesel (DE); OMEIS, Jürgen, 46286 Dorsten-Lembeck (DE); MÖSSMER, Stefan, 46499 Hamminkeln (DE); ESSER, Andrea, 46485 Wesel (DE); ROCH, Monika, 46539 Dinslaken (DE)
(86) Internationale Anmeldenummer: PCT/EP2012/004738
(87) Internationale Veröffentlichungsnummer: WO 2013/072054

(56) Entgegenhaltungen:
- EP-A2- 0 713 894
- DATABASE WPI Week 199013 Thomson Scientific, London, GB; AN 1990-095865 XP002674117, -& JP 2 048029 A (DAINIPPON INK & CHEM KK) 16. Februar 1990 (1990-02-16)
- DATABASE WPI Week 198808 Thomson Scientific, London, GB; AN 1988-054666 XP002674118, -& JP 63 012335 A (DAINIPPON INK & CHEM KK) 19. Januar 1988 (1988-01-19)

## Beschreibung

Die vorliegende Erfindung betrifft ein Verfahren zur Herstellung eines Aminaddukts und die Verwendung des Aminaddukts.

Netzmittel, welche gelöst oder dispergiert in einer Flüssigkeit vorliegen, setzen die Oberflächenspannung bzw. die Grenzflächenspannung herab und vergrößern so das Netzvermögen der Flüssigkeit. Auf diese Weise ermöglichen Netzmittel in vielen Fällen erst überhaupt eine Oberflächenbenetzung.

Dispergiermittel eignen sich im Allgemeinen zur Stabilisierung von Feststoffteilchen in Bindemitteln, Lacken, Pigmentpasten, Kunststoffen und Kunststoffmischungen, Kleb- und Dichtstoffen, zur Reduktion der Viskosität entsprechender Systeme sowie zur Verbesserung der Fließeigenschaften. Dispersionsstabilisatoren werden zur Stabilisierung bereits erzeugter Dispersionen eingesetzt.

Um Feststoffe in flüssige Medien einbringen zu können, sind hohe mechanische Kräfte erforderlich. Es ist üblich, Dispergiermittel einzusetzen, um die Dispergierkräfte zu erniedrigen und um den zur Deflockulierung der Feststoffteilchen notwendigen Gesamtenergieeintrag in das System und damit auch die Dispergierzeit so gering wie möglich zu halten. Im Falle derartiger Dispergiermittel handelt es sich um oberflächenaktive Stoffe, anionischer, kationischer und/ oder neutraler Struktur. Diese Stoffe werden in kleiner Menge entweder direkt auf den Feststoff aufgebracht oder dem Dispergiermedium zugesetzt. Zu beachten ist, dass auch nach vollständiger Deflockulierung der Feststoffagglomerate in Primärteilchen (nach dem Dispergierprozess) Reagglomerationen auftreten können, wodurch der Dispergieraufwand teilweise oder vollständig zunichte gemacht wird. Als Folge von unzulänglicher Dispergierung bzw. von Reagglomeration treten typischerweise unerwünschte Effekte auf, wie Viskositätsanstieg in flüssigen Systemen, Farbtondrift sowie Glanzverlust in Lacken bzw. in Beschichtungen und Verringerung der mechanischen Festigkeit sowie der Materialhomogenität in Kunststoffen.

Als Netz- und Dispergiermittel kommen in der Praxis verschiedenartige Verbindungstypen in Frage. Dies ist insbesondere darin begründet, dass eine hohe Anzahl verschiedener Systeme existiert, welche insbesondere auf verschiedenartigen Bindemitteln kombiniert mit unterschiedlichen zu dispergierenden Partikeln, wie Pigmenten, Füllstoffen sowie Fasern, basiert.

Die EP-B- 1 080 127 betrifft spezielle Aminogruppen sowie Poly(oxyalkylencarbonyl)-Ketten enthaltende Dispergiermittel, welche mittels einer Michael-Additionsreaktion hergestellt werden, in der eine entsprechende Aminogruppen enthaltende Ausgangsverbindung an eine ethylenisch ungesättigte Gruppe eines eine Poly(oxyalkylencarbonyl)-Kette enthaltenden "Michael-Akzeptors" gebunden wird.

Zur Dispergierung von Feststoffen sind derartige Dispergiermittel zwar grundsätzlich geeignet, jedoch liegt diesen nur eine, insbesondere gegenüber den zu dispergierenden Feststoffen begrenzte Universalität zugrunde, die die Eignung für unterschiedliche Dispergiergieraufgaben einschränkt.

Der vorliegenden Erfindung lag somit die Aufgabe zugrunde, ein Verfahren zur Herstellung von qualitativ hochwertigen sowie möglichst universell einsetzbaren Dispergiermitteladditiven bereitzustellen.

Die Lösung dieser Aufgabe ist ein Verfahren zur Herstellung eines Aminaddukts, in welchem die Umsetzung einer Polyaminkomponente (A), einer Polyesterkomponente (B) sowie einer Kohlenwasserstoffkomponente (C) in Gewichtsverhältnissen von
(A): (B) = 1 : 1000 bis 1 : 1 ,
(A) : (C) = 1 : 100 bis 100 : 1 und
(B) : (C) = 2 : 1 bis 50 : 1
in der Weise durchgeführt wird, dass gemäß Reaktionsvariante
i) zuerst aus der Polyaminkomponente (A) und der Polyesterkomponente (B) ein Reaktionszwischenprodukt (A-B) entsteht, das anschließend mit der Kohlenwasserstoffkomponente (C) umgesetzt wird oder
   gemäß Reaktionsvariante
ii) zuerst aus der Polyaminkomponente (A) und der Kohlenwasserstoffkomponente (C) ein Reaktionszwischenprodukt (A-C) gebildet wird, das nachfolgend mit der Polyesterkomponente (B) umgesetzt wird oder
   gemäß Reaktionsvariante
iii) zuerst die Polyaminkomponente (A) gleichzeitig mit der Polyesterkomponente (B) und der Kohlenwasserstoffkomponente (C) zur Reaktion gebracht wird,
wobei
die Polyaminkomponente (A) in Form von organischen Polyaminverbindungen (A') vorliegt, welche jeweils mindestens drei aus primären und sekundären Aminogruppen ausgewählte, jeweils mit der Polyesterkomponente (B) und der Kohlenwasserstoffkomponente (C) reaktionsfähige Aminogruppen (A'+) aufweisen,
die Polyesterkomponente (B) in Form von Polyesterverbindungen (B') vorliegt, die jeweils keine primären Aminogruppen sowie jeweils keine sekundären Aminogruppen enthalten, jeweils mindestens drei Estergruppen aufweisen und jeweils eine als Carboxylgruppe oder Carbonsäureanhydridgruppe vorliegende, mit primären und/oder sekundären Aminogruppen reaktionsfähige Kopplungsgruppe (B'+) enthalten und
die Kohlenwasserstoffkomponente (C) in Form von jeweils eine Verknüpfungsgruppe (C'+) aufweisenden, verzweigten oder unverzweigten, gesättigten oder ungesättigten Kohlenwasserstoffverbindungen (C') vorliegt, die jeweils keine primären Aminogruppen, jeweils keine sekundären Aminogruppen, jeweils keine Carboxylgruppen und jeweils keine Carbonsäureanhydridgruppen enthalten und jeweils ein Gesamtverhältnis bezüglich Kohlenstoffatome zu aus der Gruppe der Elemente O, N, P, S, Si ausgewählte Heteroatome von mindestens 2 : 1 aufweisen, wobei die Verknüpfungsgruppen (C'+) jeweils die Eigenschaft aufweisen, mit primären Aminogruppen unter Entstehung von sekundären Aminogruppen und/oder mit sekundären Aminogruppen unter Bildung von tertiären Aminogruppen zu reagieren und außerdem jeweils vorliegen
in Form einer Epoxidfunktion der allgemeinen Formel (I) 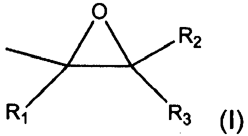 mit
R₁, R₂ und R₃ jeweils gleich oder verschieden sowie jeweils unabhängig voneinander repräsentiert durch H und/ oder durch einen gesättigten, verzweigten oder unverzweigten C₁-C₁₂-Kohlenwasserstoffrest,
wobei das Aminaddukt bei Raumtemperatur jeweils in fester Form anfällt sowie einen Schmelzbereich von 30 bis 200 °C aufweist.

Die Polyaminkomponente (A) stellt die Gesamtheit sämtlicher Polyaminverbindungen (A') (die gleich oder verschieden sein können) dar, wobei die reaktionsfähigen Aminogruppen (A'+) jeweils Molekülbestandteile der Polyaminverbindungen (A') sind.

Entsprechend besteht die Polyesterkomponente (B) aus der Gesamtheit sämtlicher Polyesterverbindungen (B') (die gleich oder verschieden sein können), wobei die Kopplungsgruppen (B'+) jeweils Molekülbestandteile der Polyesterverbindungen sind.

Die Kohlenwasserstoffkomponente (C) stellt die Gesamtheit sämtlicher Kohlenwasserstoffverbindungen (C') (die gleich oder verschieden sein können) dar, wobei die Verknüpfungsgruppen (C'+) jeweils Molekülbestandteile der Kohlenwasserstoffverbindungen (C') sind.

Gemäß Reaktionsvariante i) wird zumindest anfangs (zu Beginn der Umsetzung), jedoch oft bis zur vollständigen Umsetzung von (B), (B) mit (A) unter Entstehung von (A-B) umgesetzt und zwar ohne dass gleichzeitig (C) mit (A) (bzw. mit dem Folgeprodukt von (A)) reagiert. Anschließend wird (A-B) mit (C) umgesetzt, wobei dies ggf. auch in Anwesenheit von (B) erfolgen kann (gleichzeitige Umsetzung von (A-B) mit (B) und (C)).

Entsprechend Reaktionsvariante ii) wird zumindest anfangs (zu Beginn der Umsetzung), jedoch häufig bis zur vollständigen Umsetzung von (C), (C) mit (A) unter Entstehung von (A-C) umgesetzt und zwar ohne dass gleichzeitig (B) mit (A) (bzw. mit dem Folgeprodukt von (A)) reagiert. Anschließend wird (A-C) mit (B) umgesetzt, wobei dies ggf. auch in Anwesenheit von (C) erfolgen kann (gleichzeitige Umsetzung von (A-C) mit (B) und (C)).

Gemäß Reaktionsvariante iii) wird zumindest anfangs (zu Beginn der Umsetzung), jedoch oft über den gesamten Umsetzungszeitraum, (A) gleichzeitig mit (B) und (C) umgesetzt.

Die Formulierung "gleich oder verschieden" soll bedeuten, dass der jeweilige Rest, Substituent bzw. Molekülbestandteil sowohl innerhalb eines (Makro)Moleküls als auch zwischen verschiedenen (Makro)Molekülspezies der gleichen allgemeinen Formel variieren kann.

Das relevante Aminaddukt liegt normalerweise als ein (technisches) Rohprodukt vor, welches ggf. Lösemittel, Nebenprodukte sowie nicht umgesetzte Ausgangskomponenten enthalten kann.

Es ist hervorzuheben, dass die relevanten Aminaddukte eine gute Dispergierwirkung bezüglich eines breiten Spektrums von zu dispergierenden Feststoffen zeigen. Dies zeigt sich u. a. darin, dass nicht nur Feststoffe mit basischen Oberflächen besonders gut, sondern auch Feststoffe mit neutralen und sogar sauren Oberflächen effektiv dispergiert werden können.

Die relevanten Aminaddukte sind demgemäß von besonders hoher Qualität und universell als Netz- und Dispergiermittel einsetzbar. Weiterhin kann gesagt werden, dass die Aminaddukte sowohl in polaren als auch in unpolaren Bindemittelsystemen erfolgreich eingesetzt werden können, und dabei als Netz- und Dispergiermittel bzw. als Dispersionsstabilisatoren eine ausgezeichnete Verträglichkeit zeigen. Dies gewährleistet den erfolgreichen Einsatz in Kombination mit den unterschiedlichsten Bindemitteln und Überzugsmaterialien. Weiterhin ermöglichen die erfindungsgemäßen Aminaddukte eine flockulationsfreie Mischbarkeit von Pasten, insbesondere Pigmentpasten, bzw. der mit diesen Pasten hergestellten Bindemitteln. Darüber hinaus eignen sich die Aminaddukte als Dispersionsstabilisatoren, insbesondere als Emulsionsstabilisatoren. Durch den Einsatz der Aminaddukte wird die Viskosität des eingetragenen Mahlgutes während der Dispergierung deutlich reduziert und ermöglicht auf diese Weise die Herstellung von Formulierungen,welche einen hohen Feststoffanteil aufweisen. Auf diese Weise kann zur besseren welche einen hohen Feststoffanteil aufweisen. Auf diese Weise kann zur besseren Umweltverträglichkeit der Anteil an (flüchtigen) Lösemitteln reduziert werden. Resümierend kann gesagt werden, dass die Aminaddukte bei guter Stabilisierung von Pigmenten oder Füllstoffen die Mahlgutviskosität entsprechender Lacke, Pasten oder Kunststoffformulierungen soweit senken, dass eine Verarbeitung bei hohem Füllgrad möglich ist, ohne dass die Beständigkeit der ausgehärteten Lacke negativ beeinflusst werden. Wesentlich ist auch, dass die als Additiv eingesetzten erfindungsgemäßen Aminaddukte bereits in geringer Konzentration eine hohe Wirksamkeit bereitstellen. Darüber hinaus soll auch die gute Lagerstabilität der Aminaddukte genannt sein. Schließlich ist zu erwähnen, dass die Aminaddukte wirtschaftlich herstellbar sind und auf allgemein verfügbaren Ausgangsstoffen basieren.

In einer bevorzugten Ausführungsform der Erfindung reagieren die Polyesterkomponente (B) und die Kohlenwasserstoffkomponente (C) bei den Reaktionsbedingungen der Umsetzung nicht miteinander. Dies ist auch in der Regel für sämtliche (B) und (C) zugehörige Spezies gewünscht.

Die Polyesterkomponente (B) und die Kohlenwasserstoffkomponente (C) können jedoch bei den Reaktionsbedingungen der Umsetzung ggf. in einem geringen Maße reagieren, falls beide Ausgangskomponenten gleichzeitig im Reaktionsgemisch vorliegen. Dies ist dem Fachmann bekannt, da die für die Verknüpfung der Kohlenwasserstoffkomponente (C) vorgesehene Epoxidfunktion allgemein ausgesprochen reaktiv ist, so dass in der Praxis eventuell (wenn auch unerwünschte und geringfügige) Nebenreaktionen auftreten können. Durch geeignete Wahl der Reaktionsbedingungen lassen sich besagte Nebenreaktionen auf ein nicht störendes Maß zurückdrängen bzw. sogar vollständig unterbinden.

Entsprechend einer speziellen Reaktionsvariante iv) können die Polyaminkomponente (A), die Polyesterkomponente (B) und die Kohlenwasserstoffkomponente (C) mit der Maßgabe in über die Zeit variierenden Mengenverhältnissen zur Reaktion gebracht werden, dass mindestens der erste Zeitabschnitt der Umsetzung gemäß einer der Reaktionsvarianten i) bis iii) erfolgt.

Reaktionsvariante iv) erfolgt somit zumindest (in einem ersten Zeitabschnitt) entsprechend einer der Reaktionsvarianten i) bis iii) und ist somit als Spezialfall einer der Reaktionsvarianten i) bis iii) anzusehen. Die Umsetzung von (C) und (B) erfolgt entsprechend Reaktionsvariante iv) in über die Zeit variierenden Mengenverhältnissen. Beispielsweise erfolgt die Umsetzung in mindestens drei Stufen in der Weise, dass (A) bzw. entsprechende Folgeprodukte von (A) in aufeinanderfolgenden Zeitabschnitten jeweils entweder mit B oder mit C umgesetzt werden.

In einer bevorzugten Ausführungsform der Erfindung wird die Umsetzung von (A), (B) sowie (C) in Gewichtsverhältnissen von
(A) : (B) = 1 : 100 bis 1 : 4, bevorzugt (A) : (B) = 1 : 25 bis 1 : 7 und
(A) : (C) = 1:10 bis 10:1, bevorzugt (A) : (C) = 1 : 2 bis 2 : 1
durchgeführt.

Ein niedriger Anteil von (A) bewirkt häufig eine geringe Adsorption an Feststoffoberflächen, wobei ein hoher Anteil von (A) oft schlechte Löslichkeit und schwierige Handhabbarkeit bedeuten kann.

### Zur Polyaminkomponente (A):

Beispiele für geeignete Polyaminverbindungen (A') der Polyaminkomponente (A) sind aliphatische lineare Polyamine, wie Diethylentriamin (DETA), Triethylentetramin (TETA), Tetraethylenpentamin (TEPA), Pentaethylenhexamin, Hexaethylenheptamin und höhere Homologe, höhere lineare Kondensate der allgemeinen Formel NH₂-(C₂H₄NH)ₙ-C₂H₄-NH₂ mit n >5, Dipropylentriamin, (3-(2-Aminoethyl)aminopropylamin, N,N-Bis(3-aminopropyl)methylamin, Tetramethyliminobispropylamin, N,N-Dimethyldipropylentriamin, Bis-(3-dimethylaminopropyl)amin und N,N'-Bis(3-aminopropyl)-ethylendiamin.

Häufig liegt die Polyaminkomponente (A) in Form von organischen Polyaminverbindungen (A') vor, welche jeweils mindestens zwei, bevorzugt jeweils 6 - 600, tertiäre Aminogruppen enthalten.

Tertiäre Aminogruppen verursachen typischerweise eine gute Adsorpton an Feststoffoberflächen sowie eine geringe Neigung zu Nebenreaktionen. Weiterhin ermöglichen die tertiären Aminogruppen hochmolekulare Strukturen, wobei die Viskosität jedoch trotzdem vergleichsweise gering bleibt.

Typischerweise werden aliphatische verzweigte Polyamine, insbesondere Poly(C₂-C₄)- alkylenamine, mit primären, sekundären und tertiären Aminogruppen eingesetzt. Besonders geeignet sind die auch unter dem Namen Polyethylenimine bekannten Aziridinhomopolymere wie z.B. die Lupasol® Typen der Fa. BASF oder die Epomin® Typen der Fa. Nippon Shokubai. Diese werden nach bekannten Verfahren, z.B. durch die Polymerisation von Ethylenimin, hergestellt.

Meist beträgt in den organischen Polyaminverbindungen (A') das molare Verhältnis von primären zu sekundären Aminogruppen jeweils 1:1 bis 1:5 und das molare Verhältnis von primären zu tertiären Aminogruppen jeweils 3:1 bis 1:3.

Primäre Amine sind reaktiver als sekundäre Amine, so dass ein geringer Anteil an primären Aminen eine geringe Reaktivität bezüglich der Aufbaureaktion bedeuten kann.

In der Regel weisen auf die organischen Polyaminverbindungen (A') in ihrer Gesamtheit eine gewichtsmittlere Molmasse von 250 bis 200.000, bevorzugt von 600 bis 40.000 und besonders bevorzugt von 800 bis 10.000 g/mol.

Eine geringe Molmasse verursacht häufig eine schwache Adsorption an der Feststoffoberfläche, während eine hohe Molmasse problematisch bezüglich Handhabbarkeit und Löslichkeit sein kann.

Angaben zur gewichtsmittleren Molmasse Mw in Zusammenhang mit der vorliegenden Erfindung beziehen sich, sofern an entsprechender Stelle nichts gegenteiliges gesagt werden sollte, generell auf die Messmethode Lichtstreuung. Neben nicht modifizierten Polyaminen können auch teilweise modifizierte Polyamine, wie in der EP 0 893 155 beschrieben, eingesetzt werden. Bei diesen modifizierten Polyaminen kann es sich z.B. um Kondensate der oben beschriebenen Polyamine mit Carbonsäuren wie z.B. Stearinsäure, Ölsäure oder Tallölfettsäure handeln, die über Amidgruppierungen mit dem Polyamin verbunden sind. Auch ist es möglich, Teile des primären oder sekundären Polyamins mit Monoisocyanaten, wie Stearylisocyanat und/oder Polyisocyanaten, umzusetzen.

Eine weitere geeignete Klasse von Polyaminen, sind Homo-, Co- oder Blockcopolymere mit mindestens drei primären oder sekundären Aminogruppen, die sich entweder durch radikalische oder ionische Polymerisationen herstellen lassen, oder mittels einer polymeranalogen Reaktion an einem bereits vorgebildeten Polymer gebildet oder in ein solches eingefügt werden. Derartige Homo-, Co- oder Blockcopolymerisate besitzen ein gewichtsmittleres Molekulargewicht von bis zu 1000000 g/mol, vorzugsweise von 600 bis 200000 g/mol. Besagte Polyamine lassen sich einzeln oder in Mischung einsetzen.

### Zur Polyesterkomponente (B):

Als Polyesterverbindungen (B') der Polyesterkomponente (B) eignen sich zum Beispiel solche Verbindungen, die durch Umsetzung von Dicarbonsäuren sowie deren veresterbaren Derivaten wie beispielsweise Anhydriden, Säurechloriden oder Dialkylestern, wie Dimethylestern oder Diethylestern, durch Umsetzung mit Diolen und monofunktionellen Carbonsäuren hergestellt werden. Die Bildung von Dihydroxypolyestern kann bei Bedarf durch Einsatz entsprechend stöchiometrischer Mengen an monofunktionellen Carbonsäuren zurückgedrängt werden. Die Veresterung kann in Substanz oder auch durch azeotrope Veresterung in Anwesenheit eines Schleppmittels durchgeführt werden. Solche Kondensationsreaktionen werden beispielsweise bei Temperaturen von etwa 50° C bis 250°C durchgeführt. Beispiele für entsprechend einsetzbare Dicarbonsäuren sind Bernsteinsäure, Maleinsäure, Fumarsäure, Glutarsäure, Adipinsäure, Sebacinsäure, Pimelinsäure, Phthalsäure oder dimerisierte Fettsäuren und deren Isomere sowie deren Hydrierungsprodukte. Beispiele für entsprechend brauchbare Diole sind: Ethylenglykol, 1,2-Propandiol, 1,3-Propandiol, 1,4-Butandiol, 1,6-Hexandiol, Neopentylglykol, cis-1,2-Cyclohexandimethanol, trans-1,2-Cyclohexandimethanol, sowie Polyglykole auf Basis von Ethylenglykol und/ oder Propylenglykol. Entsprechend als Startkomponente verwendeten Monocarbonsäuren besitzen vorzugsweise 1 bis 42, insbesondere 4 bis 18, bevorzugt 8 bis 14 Kohlenstoffatome und können gesättigt oder ungesättigt, aliphatisch oder aromatisch, linear, verzweigt und/oder cyclisch sein. Beispiele für entsprechend geeignete Monocarbonsäuren sind Stearinsäure, Isostearinsäure, Ölsäure, Laurinsäure und Benzoesäure. Weitere geeignete Säuren sind die als auch als Koch-Säuren bezeichneten tertiären gesättigten Monocarbonsäuren wie 2,2-Dimethylpropansäure, 2,2-Dimethylbutansäure, 2,2-Dimethylpentansäure, tert-Nonansäure sowie Neodeansäure. Als Handelsprodukte sind derartige Koch-Säuren z.B. auch auch unter den Bezeichnungen Versatic®-Säuren (Shell), Neosäuren (Exxon) oder CeKanoic Säuren (Kuhlmann) bekannt. Die Versatic®-Säuren sind benannt nach der Gesamtzahl der C-Atome, welche das Molekül enthält. Geeignete Beispiele sind die Versatic®-Säuren 5,6, 9,10, 913,1019.

Meist liegt die Polyesterkomponente (B) in Form von Polyesterverbindungen (B') vor, die jeweils mindestens 5, bevorzugt jeweils 6 bis 70, Estergruppen aufweisen.

Estergruppen verbessern typischerweise die Löslichkeit.

Gemäß speziellen Ausführungsformen der Erfindung weisen die Polyesterverbindungen (B') zusätzlich auch noch Ethergruppen auf.

Bevorzugt weisen die Polyesterverbindungen (B') jeweils genau eine, bevorzugt jeweils als Carboxylgruppe vorliegende, reaktionsfähige Kopplungsgruppe (B'+) auf, wobei die Polyesterverbindungen (B') vorzugsweise jeweils keine weiteren funktionelle Gruppen enthalten, die bei der Umsetzung mit der Polyaminkomponente (A) reagieren.

Monofunktionalität ist gewünscht, um Vernetzung zu vermeiden, welche meist zur verschlechterten Löslichkeit, schlechteren Verträglichkeit, zu hohen Viskositäten bzw. zu geringer Verträglichkeit führt.

Häufig liegen mindestens 50 Gew.-%, bevorzugt 70 bis 100 Gew.%, der eingesetzten Polyesterverbindungen (B') in Form von linearen, monocarboxyfunktionellen Caprolactonpolyestern vor, welche bevorzugt jeweils ein gewichtsmittleres Molekulargewicht von 500 bis 10.000, bevorzugt von 800 bis 8.000 aufweisen.

Gewichtsmittlere Molekulargewichte kleiner 500 sowie größer 10000 verschlechtern häufig die universelle Verträglichkeit.

Besonders geeignete Polyester sind solche, die durch Polykondensation einer oder mehrerer, gegebenenfalls alkylsubstituierter, Hydroxycarbonsäuren wie Ricinolsäure oder 12-Hydroxystearinsäure und/oder Ringöffnungspolymerisation der korrespondierenden Lactone, wie Propiolacton, Valerolacton, Caprolacton, erhalten werden können. Die Lactonpolymerisation wird nach bekannten Verfahren, initiert durch beispielsweise p-Toluolsulfonsäure oder Dibutylzinndilaurat, bei Temperaturen von etwa 50° C bis 200°C durchgeführt. Besonders bevorzugt sind Polyester auf ε-Caprolacton-Basis, gegebenenfalls in Kombination mit δ-Valerolacton.

### Zur Kohlenwasserstoffkomponente (C):

Die Kohlenwasserstoffverbindungen (C') der Kohlenwasserstoffkomponente (C) weisen jeweils genau eine Verknüpfungsgruppe (C'+) auf und enthalten bevorzugt keine weiteren funktionellen Gruppen, die bei der Umsetzung mit der Polyaminkomponente (A) reagieren.

Die Monofunktionalität verringert die Neigung zur Vernetzung, welche meist zu schlechter Löslichkeit, schlechter Verträglichkeit sowie zu hohen Viskositäten führt. Gemäß der Erfindung liegen sämtliche Verknüpfungsgruppen (C'+) jeweils in Form von Epoxidfunktionen der allgemeinen Formel (I) vor.

Bevorzugt werden in der die Verknüpfungsgruppen (C'+) betreffenden allgemeinen Formel (I) R₁, R₂ und R₃ jeweils durch H repräsentiert.

Geeignete epoxifunktionelle Stoffe sind zum Beispiel aliphatische, cycloaliphatische und/oder aromatische Glycidylether wie beispielsweise C₁-C₂₀- Alkylglycidylether, Phenylglycidether, Kresylglycidylether, Naphthylglycidylether, Butylglycidether, p-tert.-Butyl-phenylglycidether, 2-Ethyl-Hexylglycidether, C₁₂-C₁₄-Glycidether, Allylglycidylether, 2,3-Epoxypropylneodecanoat (Cardura® E 10, Resolution Performance Products) oder Bisphenol A-basierte Epoxide (Epikote-Typen). Bevorzugt sind monofunktionelle Epoxide. Bei der Umsetzung mit den Epoxiden ensteht eine sekundäre Hydroxygruppe und am reaktionsbeteiligten Stickstoffatom eine sekundäre oder tertiäre Aminogruppe.

Typischerweise enthalten die Kohlenwasserstoffverbindungen (C') der Kohlenwasserstoffkomponente (C) jeweils insgesamt 6 bis 70 Kohlenstoffatome.

Eine Anzahl von weniger als 6 Kohlenstoffatomen bewirkt häufig eine zu hohe Polarität, während mehr als 70 Kohlenstoffatome meist die universelle Verträglichkeit verschlechtert.

In einer speziellen Ausführungsform der Erfindung enthält die Kohlenwasserstoffkomponente (C) mindestens 30 Gew. %, bevorzugt 50 bis 100 Gew. %, ungesättigte C₆-C₅₀-Kohlenwasserstoffverbindungen (C'), welche jeweils mindestens eine Aryl- und/oder Alkylarylgruppe, aufweisen.

Aromatische Gruppen verleihen den Produkten häufig eine besonders gute Adsorptionsfähigkeit bezüglich vielen Partikeloberflächen.

Gemäß einer besonderen Variante der Erfindung enthält die Kohlenwasserstoffkomponente (C) mindestens 30 Gew. %, bevorzugt 50 bis 100 Gew. %, C₁₀-C₇₀-Kohlenwasserstoffverbindungen (C'), welche jeweils mindestens einen verzweigten Alkyl- und/ oder einen verzweigten Alkenylrest enthalten.

Verzweigte Gruppen verursachen oft eine bessere Löslichkeit und begünstigen in der Regel die universelle Verträglichkeit.

Häufig enthalten die Kohlenwasserstoffverbindungen (C') der Kohlenwasserstoffkomponente (C) jeweils insgesamt 6 bis 24 Kohlenstoffatome und zusätzlich maximal drei Heteroatome aus der Gruppe der Elemente O, N, P, S, Si. Andere Heteroatome (als die letztgenannten) sind erfindungsgemäß bevorzugt nicht (in (C')) enthalten.

Bevorzugt werden die Komponenten (A) (B) und (C) in jeweils solchen stöchiometrischen Verhältnissen eingesetzt, dass insgesamt mindestens 50 Mol-%, bevorzugt 70 bis 100 Mol-% der Gesamtheit der reaktionsfähigen Aminogruppen (A'+) der eingesetzten Polyaminverbindungen (A') mit den Polyesterverbindungen (B') und/ oder mit den Kohlenwasserstoffverbindungen (C'), umgesetzt werden.

Entsprechende Umsätze kleiner 50 % bedeuten meist Produkte mit vielen reaktiven Aminogruppen, die zu unerwünschten Nebenreaktionen neigen. Als Folge sind häufig Produktverfärbungen, reduzierte Topfzeiten sowie verschlechterte Lagerstabilitäten zu verzeichnen.

Eine Teilmenge (bevorzugt weniger als 50 Mol-%, besonders bevorzugt weniger als 30 Mol-%) der reaktionsfähigen Aminogruppen (A'+) der eingesetzten Polyaminverbindungen (A') kann (u. a.) mit Carbonatverbindungen (D') einer Carbonatkomponente (D) und/ oder mit Carbonsäureverbindungen (F') einer Carbonsäurekomponente (F) zur Reaktion gebracht werden. Zu (D) bzw. (F) zugehörige Verbindungen sind definitionsgemäß keine Spezies, die (A), (B) oder (C) zuzurechnen sind.

Die Komponenten (D) und (F) können jeweils die Universalität ggf. noch weiter erhöhen.

Durch Umsetzung einer Teilmenge der primären und sekundären Aminogruppen der Polyamine (A) mit Komponente (D) und/ oder Komponente (F) werden weitere Modifikationen ermöglicht, um noch weitere Anpassungen an spezielle Systeme zu optimieren.

Geeignete Carbonate in diesem Zusammenhang sind aliphatische, cycloaliphatische und/oder aromatische Kohlensäurester, wie Dialkylcarbonate, z.B. Dimethylcarbonat, Diethylcarbonat oder Diphenylcarbonat, Catecholcarbonat oder cyclische Alkylencarbonate. Besonders geeignet sind zyklische Alkylencarbonate mit 5 oder 6-gliedrigen Ringen, die gegebenenfalls substituiert sein können. Als Substituenten sind aliphatische, cycloaliphatische und/oder aromatische Gruppen mit bis zu 30 Kohlenstoffatomen geeignet. Beispiele für entsprechend geeignete cyclische Alkylencarbonate sind Ethylencarbonat, Propylencarbonat, Glycerincarbonat, Trimethylencarbonat, 4-Methyltrimethylencarbonat, 5-Methyltrimethylencarbonat, 5,5-Dimethyltrimethylencarbonat, 5,5-Diethyltrimethylencarbonat oder 5-Methyl-5-propyltrimethylencarbonat.

Geeignete Carbonsäuren und Carbonsäureanhydride sind aliphatische, cycloaliphatische und/oder aromatische Carbonsäuren und deren Anhydride, wie Essigsäure, Propionsäure, Benzoesäure, Nitrobenzoesäure, Acetanhydrid, Bernsteinsäureanhydrid, Maleinsäureanhydrid, Phthalsäureanhydrid, Tetrahydrophthalsäureanhydrid, Alkyltetrahydrophthalsäureanhydrid Hexahydrophthalsäureanhydrid, Alkylhexahydrophthalsäureanhydrid, Trimellithsäureanhydrid, Alkenyl- und/oder Alkyl-Bernsteinsäureanhydrid mit bevorzugt 1 bis 20 Kohlenstoffatomen in den Alkenyl- oder Alkylketten.

Erfindungsgemäß fällt das Aminaddukt bei Raumtemperatur jeweils in fester Form an, wobei (B) zu (C) in einem Gewichtsverhältnis von 2:1 bis 50:1 umgesetzt wird und das Aminaddukt einen Schmelzbereich von 30 bis 200 °C aufweist. Gewichtsverhältnisse außerhalb des vorstehend genannten Bereichs verschlechtern meist die Universalität, wobei andere Schmelzbereiche entsprechend häufig die Handhabbarkeit erschweren. Das Aminaddukt kann jedoch auch in flüssiger Form erhalten werden und erhält dann erst nach Aufreinigung die feste Form (Variante 2).

Diese Variante 2 weist gegenüber der erfindungsgemäßen Variante folgende Nachteile auf: Die Entfernung des eingesetzten Lösemittels bedeutet einen zusätzlichen Arbeitsschritt, welcher insbesondere im (groß)technischen Maßstab aufgrund von erhöhtem Aufwand bezüglich Energie, Zeit und technischer Ausstattung wirtschaftlich nachteilig ist. Es gelingt in der Regel trotz dieses zusätzlichen technischen Aufwandes nicht, das Lösemittel vollständig zu entfernen. Folglich wird dann ein Produkt erhalten, welches für VOC-arme bzw. VOC-freie Anwendungen kaum bzw. nicht geeignet ist. Auch für den Einsatz in lösemittelhaltigen Anwendungen ist es meist von Vorteil, wenn derartige lösemittelfreie Additive eingesetzt werden, da dadurch die "Einschleppung" von unerwünschten "Fremdlösemitteln" vermieden wird. Anders ausgedrückt: Lösemittelfreie Additive bieten dem Anwender eine optimale Freiheit bezüglich der Lösemittelauswahl. Insbesondere im Falle von umweltfreundlichen Lösemittelrückgewinnungssystemen verursachen "Fremdlösemittel" in der Regel technische Probleme.

Erfindungsgemäß erfolgt die Umsetzung der Polyaminkomponente (A), der Polyesterkomponente (B) sowie der Kohlenwasserstoffkomponente (C) derart, dass pro Gewichtseinheit Polyesterkomponente (B) maximal 0,8 , bevorzugt maximal 0,2 , Gewichtseinheiten anderer Komponenten anwesend sind, die keiner der Komponenten (A), (B) oder (C) (und auch nicht dem reinen Reaktionsprodukt) zugehörig sind. Durch derartige Limitierung des Einsatzes der besagten anderen Komponenten, insbesondere Lösungsmittel, kann das Aminaddukt bereits ohne Aufreinigung in einer festen Form erhalten werden. In einer typischen Ausführungsform der Erfindung erfolgt die Umsetzung der Polyaminkomponente (A), der Polyesterkomponente (B) sowie der Kohlenwasserstoffkomponente (C) in Abwesenheit von organischen Lösemitteln. Dies ist erfindungsgemäß.

Die feste Form erlaubt jedoch den Einsatz für Anwendungen, für die ausschließlich feste Additive eingesetzt werden können. Beispielhaft können Anwendungen zur Thermoplastverarbeitung genannt werden. Als weitere Applikationen sollen Pulverlackanwendungen, Duroplastanwendungen, Toneranwendungen und Anwendungen für feste Pigmentpräparationen erwähnt werden.

Die Herstellung der erfindungsgemäßen Verbindungen kann, je nach Viskosität, in Substanz oder in Gegenwart von geeigneten Lösemitteln, Lösemittelgemischen oder anderen geeigneten Trägermedien durchgeführt werden. Nur die Herstellung in Substanz ist erfindungsgemäß

Sollen die Produkte beispielsweise dort eingesetzt werden, wo die Anwesenheit von flüchtigen organischen Verbindungen (VOC) nicht erwünscht ist, sollte die Formulierung möglichst lösemittelfrei oder in entsprechend als VOC-frei geltenden Trägermaterialien vorliegen.

Relevant ist auch das Aminaddukt, welches gemäß dem vorstehend beschriebenen Verfahren herstellbar ist.

Das relevante Aminaddukt eignet sich bevorzugt als Netz- und Dispergiermittel, insbesondere für Lack- und Kunststoffanwendungen.

Typischerweise weist das relevante Aminaddukt ein gewichtsmittleres Molekulargewicht von 5.000 bis 100.000 auf.

Das relevante Aminaddukt weist häufig eine kugelformartige (Mikro)Struktur auf, die jeweils einen hyperverzweigten Polyalkyleniminkern enthält, an dessen äußerer Hülle Polyestergruppen und Kohlenwasserstoffgruppen gebunden sind.

Zu erwähnen ist die Verwendung des vorstehend beschriebenen Aminaddukts oder des Aminaddukts, welches gemäß dem vorstehend beschriebenen Verfahren herstellbar ist, als Additiv, bevorzugt, in Beschichtungen, insbesondere in Lacken, in Kunststoffen, in Pigmentpasten, in Dichtstoffen, in Kosmetika, in Keramik, in Klebstoffen, in Vergussmassen, in pigmenthaltigen Massen der Flachbildschirmtechnologie, in Spachtelmassen, in Druckfarben und in Tinten, bevorzugt in Lacken.

Bei dieser Verwendung wird das Aminaddukt bevorzugt als ein Netz- und Dispergiermittel eingesetzt.

Weiterhin ist zu erwähnen ein Feststoffgemenge, welches Partikel und/oder Fasern enthält, die mit dem vorstehend beschriebenen Aminaddukt behandelt worden sind.

Schließlich ist relevant auch ein Lack und/oder Kunststoff, der das vorstehend beschriebene Aminaddukt enthält.

Die relevanten Aminaddukte finden beispielsweise als Aluminiumpassivator, Dispergiermittel, Dispersionsstabilisatoren oder Netzmittel Verwendung und lassen sich beispielsweise in pigmentierten und/oder füllstoffhaltigen Produkten, beispielsweise Pigmentkonzentraten oder -pasten, Beschichtungszusammensetzungen, Dichtstoffen, Kunststoffen, Keramiken, Kosmetika, Klebstoffen, Vergussmassen, Spachtelmassen, Druckfarben und/oder Tinten einsetzen. Bevorzugt sind Pigmentkonzentrate, die mit entsprechenden Auflacksystemen gemischt werden können, wodurch pigmentierte Lacke hergestellt werden.

So können diese beispielsweise bei der Herstellung oder Verarbeitung von Lacken, Druckfarben, Tinten, beispielsweise für Tintenstrahldruck, Papierstrich, Leder- und Textilfarben, Pasten, Pigmentkonzentraten, Keramiken, Kleb- und Dichtstoffen, Vergussmassen, Kunststoffen und kosmetischen Zubereitungen eingesetzt werden, insbesondere, wenn diese Feststoffe wie Pigmente und/oder Füllstoffe enthalten. Auch bei der Herstellung oder Verarbeitung von Formmassen auf Basis von synthetischen, halbsynthetischen oder natürlichen makromolekularen Stoffen, wie Polyvinylchlorid, gesättigten oder ungesättigten Polyestern, Polyurethanen, Polystyrolen, Polyacrylaten, Polyamiden, Epoxidharzen, Polyolefinen, wie Polyethylen oder Polypropylen, können diese eingesetzt werden. Beispielsweise lassen sich die Verbindungen zur Herstellung von Vergussmassen, Gießmassen, PVC-Plastisolen, Gelcoats, Polymerbeton, Leiterplatten, Industrielacken, Holz- und Möbellacken, Fahrzeuglacken, Schiffsfarben, Korrosionsschutzfarben, Can- und Coil-Coatings oder Maler- und Bautenlacken verwenden.

Die relevanten Aminaddukte können nicht nur in Auflacksystemen für pigmentierte Lacke eingesetzt werden. Ebenfalls möglich ist der Einsatz in einem weiten Bereich von Formulierungen bzw. Produkten, wie Harzen, Ölen, Fetten, Gleitmitteln, Gummimaterialien, Dichtstoffen, Druckfarben, Tinten, Klebstoffen, Wachsen oder Beschichtungsmittelzusammensetzungen. Die Konzentrate können auch eingesetzt werden in Formulierungen, die in der Körperpflegeindustrie hergestellt werden oder in elektrischen Anwendungen in der Elektronikindustrie, in der Schiffsindustrie, im Rahmen medizinischer Anwendungen, in der Bauindustrie oder in der Automobilindustrie. Beispiele schließen elektronisches Papier, wie das Display bei E-Books, die Verkapselung mikroelektronischer Chips und Leiterplatten, Unterwasserbootshautbeschichtungen, wie Anti-Fouling-Beschichtungen, Silikonröhren oder Gleitadditive für Bremskomponenten ein.

Die relevanten Aminaddukte können vorteilhaft auch bei der Herstellung von Farbfiltern für Flüssigkristallanzeigen, Flüssigkristallbildschirme, Farbauflösungsgeräte, Sensoren, Plasmabildschirmen, Anzeigen auf Basis der SED (Surface conduction Electron emitter Display) und für MLCC (Multi Layer Ceramic Compounds) eingesetzt werden. Die MLCC-Technologie wird bei der Herstellung von Mikrochips und Leiterplatten angewendet.

Die Verwendung in kosmetischen Präparaten kann beispielsweise zur Herstellung kosmetischer Zubereitungen wie Make-up, Puder, Lippenstifte, Haarfärbemittel, Cremes, Nagellacke und Sonnenschutzpräparaten dienen. Diese können in den üblichen Formen, beispielsweise als W/O- oder O/W-Emulsionen, Lösungen, Gele, Cremes, Lotionen oder Sprays vorliegen. Die Verbindungen können vorteilhaft in zur Herstellung dieser Zubereitungen verwendeten Dispersionen eingesetzt werden. Diese können die für diese Zwecke in der Kosmetik üblichen Trägermedien, wie Wasser, Ricinusöle oder Silikonöle und Feststoffe, wie organische und anorganische Pigmente, wie Titandioxid oder Eisenoxid, enthalten.

Zu nennen sind ebenfalls die Anwendungsbereiche NIP (Non impact printing), InkJet (auf Papier, Folie, Keramik, künstlichem und natürlichem Fasergewebe), Dispergieren von Keramik (wässrig oder wasserfrei), Dispergieren in Vergussmassen. Die Aminaddukte können auch als solches, d.h. ohne zuvor in ein entsprechendes Konzentrat eingearbeitet worden zu sein, in den zuvor genannten Formulierungen und Anwendungsbereichen zum Einsatz kommen.

Typischerweise ist das Aminaddukte sowie Pigment- und/oder Füllstoffe enthaltende Produkt ein Lack, oder ein Pigmentkonzentrat für Beschichtungszusammensetzungen. Letztlich aber ist der Einsatz der Aminaddukte in beliebigen pigmenthaltigen und/oder füllstoffhaltigen Produkten möglich.

Insbesondere handelt es sich bei den Pigmentkonzentraten um Zusammensetzungen, die neben den Aminaddukten beispielsweise organische Lösemittel und mindestens ein Pigment enthalten. Diese enthalten insbesondere keine oder nur geringe Anteile organischer Polymere als Bindemittel. Solche bekannten Bindemittel sind vorteilhafterweise in den entsprechenden Auflacksystemen vorhanden und werden nachstehend beschrieben.

Als organische Lösemittel kommen insbesondere die typischen im Bereich der Lack-und Farbindustrie eingesetzten, dem Fachmann bekannten organischen Lösemittel, wie aliphatische Lösemittel, cycloaliphatische Lösemittel, aromatische Lösemittel, wie Toluol, Xylol, Solventnaphtha, Ether, Ester und/oder Ketone, beispielsweise Butylglykol, Butyldiglykol, Butylacetat, Methylisobutylketon, Methylethylketon und/oder Lösemittel, wie Methoxypropylacetat, Diacetonalkohol, zum Einsatz.

Als Pigmente kommen die dem Fachmann bekannten Pigmente zu Einsatz. Beispiele für Pigmente sind Mono-, Di-, Tri- und Polyazopigmente, Oxazin-, Dioxazin-, Thiazin-Pigmente, Diketo-pyrrolo-pyrrole, Phthalocyanine, Ultramarin und andere Metallkomplex-Pigmente, indigoide Pigmente, Diphenylmethan-Pigmente, Triarylmethan-Pigmente, Xanthen-Pigmente, Acridin-Pigmente, Chinacridon-Pigmente, Methin-Pigmente, Anthrachinon, Pyranthron-, Perylen-Pigmente und andere polycyclische Carbonylpigmente, anorganische Pigmente, wie Carbon Black Pigmente und/oder Pigmente auf Basis von Russ, Graphit, Zink, Titandioxid, Zinkoxid, Zinksulfid, Zinkphosphat, Bariumsulfat, Lithophone, Eisenoxid, Ultramarin, Manganphosphat, Cobaltaluminat, Cobaltstannat, Cobaltzinkat, Antimonoxid, Antimonsulfid, Chromoxid, Zinkchromat, gemischten Metalloxiden auf Basis von Nickel, Bismut, Vanadium, Molybdän, Cadmium, Titan, Zink, Mangan, Cobalt, Eisen, Chrom, Antimon, Magnesium, Aluminium (beispielsweise Nickeltitangelb, Bismutvanadat-molybdatgelb oder Chromtitangelb), magnetischen Pigmenten auf Basis von Reineisen, Eisenoxiden und Chromoxiden oder Mischoxiden, Metalleffektpigmente aus Aluminium, Zink, Kupfer oder Messing sowie Perlglanzpigmente oder fluoreszierende und phosphoreszierende Leuchtpigmente. Weitere Beispiele sind nanoskalige organische oder anorganische Feststoffe mit Teilchengrößen unterhalb von 100 nm in mindestens einer Dimension, wie bestimmte Russtypen oder andere allotrope Formen des Kohlenstoffs, wie single-wall-CNT's, multi-wall-CNT's und Graphen. Die Bestimmung der Teilchengröße erfolgt bspw. mittels Transmissionselektronenmikroskopie, analytischer Ultrazentrifugation oder Methoden der Lichtstreuung. Ebenfalls zu nennen sind Partikel, die aus einem Metall-, oder Halbmetalloxid bzw. -hydroxid bestehen, sowie Partikel, die aus gemischten Metall- und/oder Halbmetalloxiden bzw. -hydroxiden bestehen. Beispielsweise lassen sich die Oxide und/oder Oxidhydroxide des Aluminiums, Siliziums, Zinks, Titans, usw. zur Herstellung solcher extrem feinteiligen Feststoffe heranziehen. Der Herstellprozess dieser oxidischen bzw. hydroxidischen bzw. oxidhydroxidischen Teilchen kann über die unterschiedlichsten Verfahren wie bsp. Ionenaustauschprozesse, Plasmaprozesse, Sol-Gel-Verfahren, Ausfällung, Zerkleinerung (beispielsweise durch Vermahlung) oder Flammhydrolyse erfolgen. Alle vorstehend genannten Pigmente können oberflächenmodifiziert vorliegen und basische, saure oder neutrale Gruppen an der Oberfläche besitzen.

Enthalten die jeweiligen Produkte, insbesondere die Beschichtungszusammensetzungen, Füllstoffe, so handelt es sich z.B. um die dem Fachmann bekannten Füllstoffe. Beispiele für pulver- oder faserförmige Füllstoffe sind zum Beispiel solche, die aufgebaut sind aus pulver- oder faserförmigen Teilchen von Aluminiumoxid, Aluminiumhydroxid, Siliziumdioxid, Kieselgur, Kieselerde, Quarz, Kieselgel, Talkum, Kaolin, Glimmer, Perlite, Feldspat, Schiefermehl, Calciumsulfat, Bariumsulfat, Calciumcarbonat, Calcit, Dolomit, Glas oder Kohlenstoff. Die eingesetzten Fasern können organischer und/oder anorganischer Natur sein und ebenso als Verstärkungsstoffe eingesetzt werden. Weitere Beispiele für Pigmente oder Füllstoffe finden sich beispielsweise in der US-A-4,795,796. Auch Flammschutzmittel, sofern die erfindungsgemäßen Verbindungen nicht bereits in üblichen Additivmengen für diesen Zweck eingesetzt werden, wie Aluminium- oder Magnesiumhydroxid und Mattierungsmittel, wie Kieselsäuren, lassen sich ebenfalls besonders gut durch die relevanten Netz- und Dispergiermittel dispergieren und stabilisieren.

Die relevanten Aminaddukte eignen sich insbesondere auch zur Herstellung von Feststoffkonzentraten, wie Pigmentkonzentraten. Dazu werden die erfindungsgemäßen Aminaddukte in einem Trägermedium wie organischen Lösemitteln, Weichmachern und/oder Wasser vorgelegt, und die zu dispergierenden Feststoffe werden unter Rühren zugegeben. Zusätzlich können diese Konzentrate Bindemittel und/oder andere Hilfsstoffe enthalten. Mit den erfindungsgemäßen Aminaddukten ist es aber insbesondere möglich, stabile bindemittelfreie Pigmentkonzentrate herzustellen. Ebenso ist es möglich, mit den erfindungsgemäßen Aminaddukten fließfähige Feststoffkonzentrate aus Pigmentpresskuchen herzustellen. Hierbei wird dem Presskuchen, der noch organische Lösemittel, Weichmacher und/oder Wasser enthalten kann, die erfindungsgemäße Verbindung zugemischt und die so erhaltene Mischung dispergiert. Die auf verschiedenen Wegen hergestellten Feststoffkonzentrate können dann in unterschiedliche Substrate wie z.B. Alkydharze, Polyesterharze, Acrylatharze, Polyurethanharze oder Epoxidharze eingearbeitet werden. Pigmente können aber auch lösemittelfrei direkt in den erfindungsgemäßen Aminaddukten dispergiert werden und eignen sich dann besonders zur Pigmentierung von thermoplastischen und duroplastischen Kunststoffformulierungen.

Je nach Einsatzgebiet werden die relevanten Aminaddukte in solchen Mengen eingesetzt, dass in dem letztlich für die weitere Anwendung interessanten Produkt vorteilhaft ein Anteil des erfindungsgemäßen Netz- und Dispergiermittels von 0,01 bis 10 Gew.-%, bezogen auf die Gesamtmenge des jeweiligen Produkts, besteht. Möglich sind aber auch höhere Anteile.

Bezogen auf den zu dispergierenden Feststoff, beispielsweise das Pigment, wird das erfindungsgemäße Netz- und Dispergiermittel in einer Menge von bevorzugt 0,5 bis 100 Gew.-% eingesetzt. Werden schwer zu dispergierende Feststoffe verwendet, kann die Menge an eingesetztem erfindungsgemäßen Netz- und Dispergiermittel durchaus höher sein. Die Menge an Dispergiermittel ist im Allgemeinen abhängig von der zu belegenden Oberfläche des zu dispergierenden Stoffes. Von Bedeutung kann also beispielsweise sein, um welches Pigment es sich handelt. Allgemein lässt sich sagen, dass zur Dispergierung anorganischer Pigmente meist weniger Dispergiermittel notwendig ist als für organische Pigmente, da letztere meist über eine höhere spezifische Oberfläche verfügen und von daher eine größere Menge an Dispergiermittel nötig ist. Typische Dosierungen des Netz- und Dispergiermittels für anorganische Pigmente liegen beispielsweise bei 1 bis 20 Gew.-%, für organische Pigmente bei 10 bis 50 Gew.-%, jeweils bezogen auf den zu dispergierenden Feststoff, insbesondere das Pigment. Bei sehr feinteiligen Pigmenten (beispielsweise einigen Rußen) sind auch Zugabemengen von 30 bis 90% oder mehr nötig. Als Kriterien für eine ausreichende Pigmentstabilisierung können beispielsweise Glanz und Transparenz der Beschichtungszusammensetzungen oder der Grad des Ausschwimmens herangezogen werden. Die Dispergierung der Feststoffe kann als Einzelanreibung erfolgen oder auch als Gemischanreibung mit mehreren Pigmenten gleichzeitig, wobei die besten Ergebnisse in der Regel bei Einzelanreibungen zu erreichen sind. Bei der Verwendung von Mischungen verschiedener Feststoffe kann es durch gegensätzliche Ladungen auf den Feststoffoberflächen verstärkt zu Agglomerationen in der flüssigen Phase kommen. In diesen Fällen lässt sich bei Einsatz der erfindungsgemäßen Aminaddukte häufig eine gleichnamige, in der Regel positive, Ladung aller Teilchen erreichen und damit Instabilitäten durch Ladungsunterschiede vermeiden. Ihre optimale Wirkung erzielen die Dispergiermittel bei Zugabe zum Mahlgut, insbesondere, wenn zunächst der zu dispergierende Feststoff nur mit dem Additiv und gegebenenfalls Lösemitteln gemischt wird ("Premix"), da dann das Additiv bevorzugt auf die Feststoffoberfläche adsorbieren kann, ohne in Wettbewerb mit den Bindemittel-Polymeren treten zu müssen. In der Praxis ist diese Vorgehensweise aber nur in Ausnahmefällen nötig. Bei Bedarf können die erfindungsgemäßen Aminaddukte auch nachträglich eingesetzt werden (als sogenannte "Post-Additive"), zum Beispiel um in einem fertig aufgelackten Ansatz Ausschwimm- oder Flockulationsprobleme zu lösen. In der Regel sind in diesem Fall aber erhöhte Additiv-Dosierungen erforderlich.

Die Produkte, insbesondere die Beschichtungszusammensetzungen beziehungsweise Lacke, in denen die erfindungsgemäßen Aminaddukte letztlich ihre Wirkungen entfalten sollen, können zudem ein organisches Polymer als Bindemittel enthalten. Solche Bindemittel sind dem Fachmann bekannt. Dieses mindestens eine Bindemittel kann beispielsweise über ein Auflacksystem eingeführt werden, welches beispielsweise mit einem Pigmentkonzentrat, enthaltend die erfindungsgemäßen Aminaddukte, gemischt wird, so dass es sich bei dem betrachteten Produkt um einen pigmentierten Lack handelt. Möglich sind aber auch andere pigmentierte und/oder füllstoffhaltige Produkte, beispielsweise Kunststoffe, Dichtstoffe und weitere dem Fachmann bekannte Produkte auf Basis einer organischen polymeren Matrix. Als Produkt ist ein System anzusehen, welches ein polymeres Harz beziehungsweise organisches Polymer als Bindemittel enthält und dadurch in der Lage ist, unter geeigneten Härtungsbedingungen eine feste organische, polymere Matrix zu bilden (beispielsweise eine Beschichtungszusammensetzung). Ebenfalls als Produkt wird ein System bezeichnet, dass durch einfache Vermischung mit einer Komponente, welche ein Bindemittel enthält, zur Bildung einer solchen organischen, polymeren Matrix fähig ist (beispielsweise ein Pigmentkonzentrat). Zum Einsatz kommen beispielsweise, aber nicht ausschließlich die dem Fachmann bekannten Alkydharze, Polyesterharze, Acrylatharze, Polyurethanharze, Cellulosenitrate, Celluloseacetobutyrate, Melamine, Chlorkautschuken und/oder Epoxidharze. Beispiele für Beschichtungen auf Wasserbasis sind kathodische oder anodische Elektrotauchlackierungen z.B. für Automobilkarossen. Weitere Beispiele sind Putze, Silikatfarben, Dispersionsfarben, Wasserlacke auf Basis von wasserverdünnbaren Alkyden, Alkydemulsionen, Hybridsystemen, 2-Komponenten-Systemen, Polyurethan- und Acrylat-Dispersionen.

Möglich sind sowohl 1-Komponentensysteme als auch 2-Komponentensysteme, wobei im letzteren Fall in der Regel noch Polyisocyanate, Melaminharze und/oder Polyamidharze als die typischen, dem Fachmann geläufigen Vernetzungsmittel in einer zweiten Komponente vorhanden sind. Bevorzugt sind Produktssysteme, insbesondere Beschichtungszusammensetzungen, die eine Acrylatharz als Bindemittel enthalten. In einer weiteren Variante handelt es sich um eine 2-Komponenten (2K) Beschichtungszusammensetzung bzw. einen 2K-Lack, der ein Epoxidharz in der Bindemittelkomponente und ein Polyamidharz in der Vernetzerkomponente enthält.

Die als Produkte bevorzugten Beschichtungszusammensetzungen können wasserbasierend oder lösemittelbasierend sein. Unter wasserbasierend ist zu verstehen, dass die Beschichtungszusammensetzung als Lösemittel hauptsächlich Wasser enthält. Insbesondere sind bei einer wasserbasierenden Beschichtungszusammensetzung nicht mehr als 10 Gew.-% organische Lösemittel, bezogen auf die Gesamtmenge an Lösemitteln, in der Beschichtungszusammensetzung enthalten. Als lösemittelbasierend gilt eine Beschichtungszusammensetzung, die nicht mehr als 5 Gew.-%, bevorzugt nicht mehr als 2 Gew.-% Wasser, bezogen auf die Gesamtmenge an Lösemitteln enthält.

Als weitere Produktkomponenten kommen beispielsweise in Frage Photoinitiatoren, Entschäumer, Netzmittel, filmbildende Hilfsmittel, wie Cellulose-Derivate (beispielsweise Cellulosenitrate, Celluloseacetate, Celluloseacetobutyrat), Reaktiwerdünner, Verlaufmittel, Dispergiermittel, und/oder rheologiesteuernde Additive.

Die Herstellung der als Produkte bevorzugten Pigmentkonzentrate und Beschichtungszusammensetzung erfolgt über die dem Fachmann geläufigen Verfahren. Es kommen die bekannten Methoden zum Einsatz, wie beispielsweise die schrittweise Zugabe unter Rühren und Vermischung der Bestandteile der Beschichtungszusammensetzung in üblichen Mischaggregaten, wie Rührkessel oder Dissolver.

Unter Verwendung der bevorzugten Pigmentkonzentrate und Beschichtungszusammensetzungen können Beschichtungen bzw. Lackschichten hergestellt werden. Die Herstellung der Beschichtung erfolgt über die dem Fachmann geläufigen Applikationstechniken auf ein Substrat und anschließende Härtungsverfahren.

Die Applikation erfolgt beispielsweise durch die bekannten Spritz-, Sprüh-, Streich-, Roll-, Giess-, Tränk- und/oder Tauchverfahren. Nach der Applikation der Beschichtungszusammensetzung auf ein Substrat erfolgt die Härtung beziehungsweise Trocknung nach gängigen Methoden. Z.B. kann die applizierte Beschichtungszusammensetzung physikalisch trocknend, thermisch und/oder unter Anwendung aktinischer Strahlung (strahlenhärtend), vorzugsweise UV-Strahlung sowie Elektronenstrahlung härtbar sein. Die thermische Härtung kann beispielsweise im Bereich von etwa 10°C bis etwa 400 °C, je nach Art der Beschichtungszusammensetzung und/oder des Substrats, erfolgen. Auch die Dauer der Härtung ist individuell beispielsweise von der Art des Härtungsverfahrens (thermisch oder aktinisch), der Art der eingesetzten Beschichtungszusammensetzung und/oder den Substraten abhängig. Dabei kann das Substrat bewegt werden oder auch ruhen.

Neben der oben beschriebenen Anwendung als Dispergiermittel und/oder Beschichtungsmittel für pulver- und faserförmige Feststoffe können die Aminaddukte auch als Viskositätsreduzierer und Kompatibilisatoren in Kunstharzen eingesetzt werden. Beispiel für solche Kunstharze sind die sogenannten "sheet molding compounds" (SMC) und "bulk molding compounds" (BMC), die aus stark füllstoff- und faserhaltigen ungesättigten Polyesterharzen bestehen. Ihre Herstellung und Verarbeitung ist beispielhaft in der US-A-4,777,195 beschrieben. Ein Problem bei SMC- und BMC-Kunstharzmischungen besteht darin, dass oftmals Polystyrol (PS) der Formulierung zugesetzt wird, um die Schrumpfung während des Verarbeitungsprozesses zu reduzieren. PS ist nicht mit den verwendeten ungesättigten Polyesterharzen verträglich und es kommt zur Separation der Komponenten. Bei Verwendung von PS-gefüllten SMC- oder BMC-Mischungen können die erfindungsgemäßen Aminaddukte aufgrund ihrer guten Dispergierqualitäten eine Kompatibilisierung zwischen PS und ungesättigtem Polyesterharz herbeiführen, wodurch sich die Lagerstabilität und Verarbeitungssicherheit solcher Mischungen erhöht.

Mittels der relevanten Aminaddukte können z.B. in unverträglichen Polyol-Mischungen, Polyol-Isocyanat-Mischungen oder Polyol-Treibmittelmischungen (werden z.B. bei der Polyurethan-Herstellung eingesetzt) Phasenvermittlungseffekte erzielt werden.

Die Erfindung soll nachstehend anhand von Beispielen zusätzlich erläutert werden.

Bei molekular uneinheitlichen Substanzen stellen die angegebenen Molekulargewichte Durchschnittswerte dar. Die Molekulargewichte werden bei Vorhandensein titrierbarer Endgruppen, wie Säure-, Hydroxy- oder Amino-Gruppen durch Endgruppenbestimmung über die Ermittlung der Säurezahl, OH-Zahl beziehungsweise der Amin-Zahl bestimmt. Bei Verbindungen auf die eine Endgruppenbestimmung nicht anwendbar ist, wird das Molekulargewicht mittels Lichtstreuung bestimmt.

Sofern nicht anders ausgeführt, handelt es sich bei Angaben in Teilen um Gewichtsteile und bei Angaben in Prozenten um Gewichtsprozente.

### Herstellvorschriften:

### a) Allgemeine Herstellvorschrift Polyesterkomponenten aus Lactonen:

In einem mit Rührer, Thermometer, Rückflusskühler und Stickstoffeinleitungsrohr versehenen Vierhalskolben werden die Stoffe R1a) bis R1c) vorgelegt und unter Rühren unter N2-Gas auf 100°C aufgeheizt.

Dann wird der Katalysator zugegeben und weiter unter N2-Gas aufgeheizt auf T1. Bei dieser Temperatur wird gerührt, bis der FK >= 99% erreicht ist.

### b) Allgemeine Herstellvorschrift für Polyesterkomponenten aus Hydroxycarbonsäuren:

In einem mit Rührer, Thermometer, Rückflusskühler und Stickstoffeinleitungsrohr versehenen Vierhalskolben werden die Stoffe R1a) bis R1c) unter Rühren und N2-Gas auf 100°C erhitzt.

Bei 100°C wird der Katalysator zugegeben und ein Wasserabscheider aufgesetzt. Es wird weiter aufgeheizt, und das frei werdende Wasser wird durch den Wasserabscheider abgetrennt.

Die Reaktionstemperatur wird dem frei werdenden Wasser angepasst und geht bis T1. Wenn kein Reaktionswasser mehr frei wird, ist die Reaktion abgeschlossen.

### c) Allgemeine Herstellvorschrift für Polyesterkomponenten aus Diolen und Dicarbonsäuren:

In einem mit Rührer, Thermometer, Rückflusskühler, Wasserabscheider und Stickstoffeinleitungsrohr versehenen Vierhalskolben werden die Stoffe R1a) bis R1c) mit dem Katalysator zusammen eingewogen und unter N2-Gas aufgeheizt.

Das entstehende Reaktionswasser wird über den Wasserabscheider aufgefangen. Die Reaktionstemperatur wird dem frei werdenden Wasser angepasst und geht bis T1.

Wenn kein Reaktionswasser mehr frei wird, ist die Reaktion abgeschlossen.

### d) Allgemeine Herstellvorschrift für Zwischenprodukte: Umsetzung von Polyestern mit Aminen unter Wasserabspaltung:

In einem mit Rührer, Thermometer, Rückflusskühler, Wasserabscheider und Stickstoffeinleitungsrohr versehenen Vierhalskolben werden die Stoffe R2a) und R2b) vorgelegt und unter N2-Gas aufgeheizt. Das frei werdende Reaktionswasser wird über den Wasserabscheider aufgefangen. Die Reaktionstemperatur wird dem frei werdenden Wasser angepasst und geht bis T1. Wenn kein Reaktionswasser mehr frei wird, ist die Reaktion abgeschlossen.

### e) Allgemeine Herstellvorschrift für Zwischenprodukte: Umsetzung von Aminen mit Kohlenwasserstoffkomponenten

In einem mit Rührer, Thermometer, Rückflusskühler und Stickstoffeinleitungsrohr versehenen Vierhalskolben wird die Reaktionskomponente R2a) vorgelegt und unter N2-Gas auf die Reaktionstemperatur T1 aufgeheizt. Die Reaktionskomponente R2b) wird in der vorgegeben Zeit X1 zudosiert. Die Nachreaktion ist 1 h bei T1.

### f) Allgemeine Herstellvorschrift gemäß Reaktionsvariante i):

In einem mit Rührer, Thermometer, Rückflusskühler und Stickstoffeinleitungsrohr versehenen Vierhalskolben wird die Reaktionskomponente 3a) vorgelegt und unter N2-Gas auf 100°C aufgeheizt.

Dann wird die Reaktionskomponente 3b) zugegeben. Bei T1 wird die Zeit X1 gerührt.

Dann wird die Reaktionskomponente 3c) zugegeben und unter N2-Gas auf T2 geheizt. Die Nachreaktion ist bei T2 über Zeit X2. Im Falle einer weiteren Umsetzung mit einem Rohstoff 3d) wird dieser 1 h nach 3c) zugegeben und die Nachreaktionszeit entsprechend angehangen.

### g) Allgemeine Herstellvorschrift gemäß Reaktionsvariante i) mit Zwischenprodukt:

In einem mit Rührer, Thermometer, Rückflusskühler und Stickstoffeinleitungsrohr versehenen Vierhalskolben wird die Reaktionskomponente 3a) vorgelegt und unter N2-Gas auf 100°C aufgeheizt.

Bei 100°C wird die Reaktionskomponente 3b) zugegeben, dann wir aufgeheizt auf T1 und die Zeit X1 gerührt.

### h) Allgemeine Herstellvorschrift gemäß Reaktionsvariante ii):

In einem mit Rührer, Thermometer, Rückflusskühler und Stickstoffeinleitungsrohr versehenen Vierhalskolben wird Reaktionskomponente 3a) vorgelegt und auf T1 geheizt. Komponente 3b) wird in X1 zudosiert. Nach dem Dosieren erfolgt 0,5 h Nachreaktion bei T1. Anschließend wird die Reaktionskomponente 3c) zugegeben, und es wird unter N2-Gas auf T2 aufgeheizt. Anschließend erfolgt eine Nachreaktionzeit X2 bei T2.

### i) Allgemeine Herstellvorschrift gemäß Reaktionsvariante (ii) mit Zwischenprodukt:

In einem mit Rührer, Thermometer, Rückflusskühler und Stickstoffeinleitungsrohr versehenen Vierhalskolben wird Reaktionskomponente 3a) vorgelegt und auf T1 geheizt. Komponente 3b) wird in der Zeit X1 zugegeben.

Anschließend wird unter N2-Gas auf T2 aufgeheizt. Nachreaktionszeit ist dann X2 bei T2.

### j) Allgemeine Herstellvorschrift gemäß Reaktionsvariante iii):

In einem mit Rührer, Thermometer, Rückflusskühler und Stickstoffeinleitungsrohr versehenen Vierhalskolben wird die Reaktionskomponente 3a) vorgelegt und unter N2-Gas auf T1 aufgeheizt. Anschließend werden die Reaktionskomponenten 3b) und 3c) jeweils separat in Z1 zugegeben. Dann wird auf T2 aufgeheizt und für die Zeit X2 wird die Mischung bei T2 zur Nachreaktion gerührt.

### k) Allgemeine Herstellvorschrift gemäß Reaktionsvariante iv):

In einem mit Rührer, Thermometer, Rückflusskühler und Stickstoffeinleitungsrohr versehenen Vierhalskolben werden die Reaktionskomponenten 3 a) und b) vorgelegt und unter N2-Gas auf T1 aufgeheizt.

Die Reaktionskomponente 3c) wird in X1 zudosiert. Es folgt 0,5 h Nachreaktion bei T1. Anschließend wird die Reaktionskomponente 3d) zugegeben und unter N2-Gas weiter auf T2 geheizt. Es folgt Nachreaktion X2 bei T2 unter N2-Gas.

### Herstellung eines nicht erfindungsgemäßen Vergleichsbeispiels EX1:

In einem mit Rührer, Thermometer, Rückflusskühler und Einleitungsrohr versehenen Vierhalskolben werden 5,5 Teile Hydroxyethylacrylat mit 66,00 Teilen Caprolacton und 28,3 Teilen Valerolacton mit 0,01% Monobutylzinnoxid und 0,1% Hydrochinon unter einer Luft-Atmosphäre und Rühren auf 120°C erhitzt um einen Polyester mit Mn 2100 zu erhalten. Nach 12h bei 120°C wird abgekühlt auf 65 °C. Dann werden 6,91 Teile Polyethylenimin MG 2000 zugegeben. Die Reaktanten werden dann 2h bei 65°C gerührt.

### Herstellung eines nicht erfndungsgemäßen Beispiels EX2, vergleichbar mit E14, aber ohne Komponente C :

In einem mit Rührer, Thermometer, Rückflusskühler und Einleitungsrohr versehenen Vierhalskolben werden 94,3 Teile Polyester B10 vorgelegt, auf 100°C geheizt und 5,7 Teile eine Polyethylenimins mit MG 2000 zugegeben. Dann wird auf 140°C aufgeheizt und 2 Stunden bei dieser Temperatur gerührt.

**Tabelle Polyesterkomponenten**

| **Bsp** | **HV** | **R 1a)** | **% R1a)** | **R 1b)** | **% R1b)** | **R1c)** | **%R1c)** | **Kat** | **%** | **T1** | **MG** |
|---|---|---|---|---|---|---|---|---|---|---|---|
| B1 | a) | LS | 20,05 | CAPA | 79,80 | | | ZB | 0,15 | 190,00 | 1000 |
| B2 | a) | HSS | 22,40 | CAPA | 77,50 | | | ZB | 0,10 | 190,00 | 1500 |
| B3 | a) | LS | 14,90 | CAPA | 85,00 | | | ZB | 0,10 | 190,00 | 1300 |
| B4 | a) | RFS | 19,90 | CAPA | 79,80 | | | ZB | 0,30 | 190,00 | 1500 |
| B5 | a) | RFS | 15,40 | CAPA | 84,30 | | | ZB | 0,30 | 190,00 | 2000 |
| B6 | a) | LS | 11,30 | CAPA | 77,30 | VAL | 11,30 | IPT | 0,50 | 190,00 | 1770 |
| B7 | a) | LS | 14,00 | CAPA | 71,70 | VAL | 14,00 | IPT | 0,30 | 190,00 | 1400 |
| B8 | a) | LS | 19,90 | CAPA | 59,80 | VAL | 19,90 | IPT | 0,40 | 190,00 | 1000 |
| B9 | a) | HSS | 32,40 | CAPA | 67,30 | | | ZB | 0,30 | 190,00 | 1000 |
| B10 | a) | LS | 9,88 | CAPA | 90,10 | | | ZB | 0,02 | 190,00 | 2000 |
| B11 | a) | LS | 13,70 | CAPA | 85,80 | | | IPT | 0,50 | 190,00 | 1500 |
| B12 | b) | RFS | 99,00 | | | | | PTS | 1,00 | 170,00 | 1500 |
| B13 | b) | HSS | 99,00 | | | | | PTS | 1,00 | 170,00 | 1200 |
| B14 | b) | RFS | 49,50 | HSS | 49,50 | | | PTS | 1,00 | 170,00 | 3000 |
| B15 | c) | LS | 22,00 | BDO | 29,50 | ADS | 48,20 | DBS | 0,30 | 160,00 | 900 |
| B16 | c) | ADS | 62,80 | BDO | 36,20 | | | PTS | 1,00 | 160,00 | 3500 |
| B17 | c) | PSA | 66,40 | BDO | 33,40 | | | DBS | 0,20 | 160,00 | 1300 |
| B18 | a) | LS | 8,7 | Capa | 73,8 | VAL | 17,3 | IPT | 0,2 | 160,0 | 2100 |
| B19 | a) | LS | 11,3 | CAPA | 88,2 | | | IPT | 0,5 | 190 | 1770 |
| B20 | a) | LS | 14 | CAPA | 85,7 | | | IPT | 0,3 | 190 | 1400 |
| B21 | a) | LS | 19,9 | CAPA | 79,7 | | | IPT | 0,4 | 190 | 1000 |
| B22 | a) | LS | 8,7 | Capa | 91,1 | | | IPT | 0,2 | 160 | 2100 |

| | | | | | | | | | | | |
|---|---|---|---|---|---|---|---|---|---|---|---|
| Bsp = Beispiel; HV = Herstellvorschrift; Kat = Katalysator; T(Zahl) Temperatur wie in der HV beschrieben; LS = Laurinsäure; HSS = Hydroxystearinsäure, RFS = Ricinolfettsäure; CAPA = epsilon-Caprolacton; VAL = delta-Valerolacton; BDO = Butandiol; ADS= Adipinsäure; ZB = Zirconiumbutylat; PT = Isopropyltitanat; PTS= p-Toluolsulfonsäure | | | | | | | | | | | |

**Tabelle Zwischenprodukte**

| **Bsp** | **HV** | **R 2a)** | **% R2a)** | **R 2b)** | **% R2b)** | **T1** | **X1** |
|---|---|---|---|---|---|---|---|
| Z1 | d) | B12 | 94,00 | TEPA | 6,00 | 160°C | 180 |
| Z2 | d) | B12 | 93,50 | DETA | 6,50 | 160°C | 150 |
| Z3 | d) | B12 | 93,90 | PEI 300 | 6,10 | 160°C | 150 |
| Z4 | d) | B13 | 94,70 | TETA | 5,30 | 160°C | 180 |
| Z5 | e) | PEI 1200 | 62,30 | PGE | 37,70 | 100 | 150 |
| Z6 | e) | DETA | 28,60 | LA | 71,40 | 100 | 120 |
| Z7 | e) | TETA | 44,20 | EHA | 55,80 | 100 | 120 |
| Z8 | e) | PEI 300 | 61,70 | PGE | 38,30 | 100 | 150 |
| Z9 | e) | TEPA | 60,00 | BA | 40,00 | 100 | 150 |

| | | | | | | | |
|---|---|---|---|---|---|---|---|
| X (Zahl) = Reaktionszeit in der HV beschrieben; TETA = Triethylentetramin; TEPA = Tetraethylenpentamin; DETA = Diethylentetramin; PEI (Zahl) = Polyethylenimin (MG); IPA = n 3-Aminopropylimidazol; EPN = Epoxypropylneodecanoat; PGE = Phenylglycidether; BA = Butylacrylat | | | | | | | |

**Tabelle Endprodukte**

| **Bsp** | **HV** | **R 3a)** | **% 3a)** | **R 3b)** | **% 3b)** | **R c)** | **%R3c)** | **R d)** | **%R3d)** | **T1 [°C]** | **X1 [min]** | **T2 [°C]** | **X2 [min]** |
|---|---|---|---|---|---|---|---|---|---|---|---|---|---|
| E1 | i) | B1 | 81,70 | Z6 | 18,30 | | | | | 100 | 20 | 140 | 120 |
| E2 | i) | B2 | 90,60 | Z8 | 9,40 | | | | | 100 | 20 | 140 | 120 |
| E3 | i) | B2 | 94,80 | Z7 | 5,20 | | | | | 100 | 20 | 140 | 120 |
| E4 | f) | B2 | 84,50 | PEI 1200 | 7,70 | EPN | 7,80 | | | 100 | 30 | 140 | 180 |
| E5 | h) | PEI 2000 | 8,70 | EPN | 8,90 | B3 | 82,40 | | | 100 | 120 | 140 | 180 |
| E6 | h) | PEI 1200 | 7,70 | EHA | 7,80 | B4 | 84,50 | | | 100 | 120 | 140 | 120 |
| E7 | i) | B4 | 87,00 | Z9 | 13,00 | | | | | 100 | 20 | 130 | 180 |
| E8 | i) | B5 | 91,70 | Z5 | 8,30 | | | | | 100 | 20 | 130 | 180 |
| E9 | i) | B6 | 88,80 | Z9 | 11,20 | | | | | 100 | 20 | 140 | 120 |
| E10 | i) | B7 | 84,60 | Z9 | 15,40 | | | | | 100 | 20 | 140 | 120 |
| E11 | h) | PEI 1200 | 8,70 | EPN | 8,80 | B7 | 82,50 | | | 100 | 120 | 120 | 180 |
| E12 | h) | PEI 800 | 6,80 | PC | 3,4 | B8 | 86,40 | CGE | 3,4 | 100 | 120 | 140 | 180 |

**Tabelle Endprodukte**

| **Bsp** | **HV** | **R 3a)** | **%3a)** | **R 3b)** | **% 3b)** | **R c)** | **%R3c)** | **Rd)** | **%R3d)** | **T1 [°C**] | **X1 [min]** | **T2 [°C**] | **X2 [min]** |
|---|---|---|---|---|---|---|---|---|---|---|---|---|---|
| E13 | i) | B9 | 81,70 | Z9 | 18,30 | | | | | 100 | 20 | 140 | 120 |
| E14 | k) | B10 | 60,00 | PEI 2000 | 9,80 | PGE | 11,60 | B10 | 18,60 | 100 | 60 | 120 | 180 |
| E15 | i) | B11 | 87,00 | Z9 | 13,00 | | | | | 100 | 20 | 140 | 180 |
| E16 | h) | PEI 2000 | 5,70 | PGE | 3,00 | B11 | 91,30 | | | 100 | 120 | 140 | 180 |
| E17 | i) | Z1 | 92,40 | EHA | 7,60 | | | | | 80 | 60 | | |
| E18 | i) | Z2 | 86,00 | LA | 14,00 | | | | | 80 | 60 | | |
| E19 | i) | Z3 | 93,30 | EPN | 6,70 | | | | | 80 | 60 | | |
| E20 | i) | Z4 | 95,80 | MSA | 4,20 | | | | | 80 | 60 | | |
| E21 | j) | B10 | 85,00 | DMDPTA | 8,10 | PGE | 6,90 | | | 60 | 60 | 120 | 240 |
| E22 | f) | B14 | 93,60 | PEI 300 | 3,2 | PC | 2,0 | CGE | 1,2 | 100 | 30 | 140 | 180 |
| E23 | f) | B16 | 95,60 | DETA | 1,7 | EHA | 2,70 | | | 100 | 30 | 120 | 240 |
| E24 | f) | B17 | 88,50 | DETA | 3,9 | LA | 7,60 | | | 100 | 30 | 120 | 240 |
| E25 | j) | B1 | 65,80 | TETA | 9,70 | EHA | 25,50 | | | 100 | 60 | 120 | 240 |
| E26 | k) | B15 | 90,30 | PEI 300 | 6,5 | EHA | 2,30 | MSA | 1,20 | 100 | 30 | 120 | 120 |
| E27 | f) | B18 | 78,6 | PEI 2000 | 9,7 | EHA | 11,7 | | | 100 | 30 | 140 | 120 |
| E28 | i) | B19 | 88,8 | Z9 | 11,2 | | | | | 100 | 20 | 140 | 120 |
| E29 | i) | B20 | 84,6 | Z9 | 15,4 | | | | | 100 | 20 | 140 | 120 |
| E30 | h) | PEI 1200 | 8,7 | EPN | 8,8 | B20 | 82,5 | | | 100 | 120 | 120 | 180 |
| E31 | h) | PEI 800 | 6,8 | PC | 3,4 | B21 | 86,4 | CGE | 3,4 | 100 | 120 | 140 | 180 |
| E32 | f) | B22 | 78,6 | PEI 2000 | 9,7 | EHA | 11,7 | | | 100 | 30 | 140 | 120 |
| E33 | h) | PEI 1200 | 7,70 | CGE | 7,80 | B4 | 84,50 | | | 100 | 120 | 140 | 120 |

| | | | | | | | | | | | | | |
|---|---|---|---|---|---|---|---|---|---|---|---|---|---|
| MSA = Maleinsäureanhydrid; EHA = Ethylhexylacrylat; LA = Laurylacrylat; PC = Propylencarbonat, DMDPTA = Dimethyldipropylentriamin" CGE = o-Cresylglycidylether Alle in der Tabelle aufgeführten Endprodukte sind lösemittelfrei und bei 30 °C fest. | | | | | | | | | | | | | |

### Anwendungstechnische Prüfung:

Die relevanten Aminaddukte (Polymere) finden u. a. Verwendung als Netz- und Dispergiermittel zur Herstellung von Pigmentkonzentraten, Lacksystemen und Inkjet Systemen.

### Anwendungstechnische Prüfung in Inkjet-Systemen:

### Arbeitsgeräte:

Rüttler : LAU-Paint Shaker DAS H [/A) 200- K
Glanz/Haze Messung:
   - Trigloss, (Byk Gardner)
   - Meßwinkel 20°
Stoffe für die anwendungstechnische Prüfung:
   Vinnol-Lösung: 75% Butylglykolacetat + 20% Cyclohexanon + 5% Vinnol 15/45;
   Vinnol 15/45: Copolymer aus ca. 85 Gew.% Vinylchlorid undca. 15 Gew.% Vinylacetat; Hersteller Wacker
   Novoperm P-M3R: P.Y.139
   Ink Jet Magenta E02: P.R.122 Typ A
   Irgalite Blue P.B. 15:4, Typ B
   NiPex 90 p.Bk-7, pH= 9,0

### Arbeitsweise:

- Zur Herstellung der Pigmentkonzentrate Positionen 1-4 in eine 100ml Glasflasche einwiegen und vermischen. Anschließend 100g Zirkoniumperlen (0,4 - 0,6mm) hinzugeben.
- Vorgemischte Pigmentkonzentrate für 960 Minuten im Rüttler bei Kühllevel 3 dispergieren
- Pigmentkonzentrate in 50ml Glasflasche sieben.
- Nach Lagerung über Nacht und nach Lagerung für eine Woche bei 40°C die Viskositäten mittels Stress Tech Instrument ermitteln.
- Die Konzentrate werden auf PU-Folie mit 25µm Nassfilmschichtdicke auftragen.
- Die Bewertung der Farbstärke und Transparenz erfolgt visuell auf der Folie, für die Glanz und Haze Messung werden die Folien auf schwarzen Karton gelegt und gemessen.

### Formulierung 1 - Pigmentkonzentrate auf Basis Novoperm Gelb P-M3R

| **Pos.** | **Rohstoff** | **[g]** |
|---|---|---|
| 1 | VINNOL-Lösung* | 15,0 |
| 2 | Butylglykolacetat | 25,9 |
| 3 | Additiv | 2,1 |
| 4 | Novoperm Gelb P-M3R | 7,0 |
| | | **50,0** |
| | | |
| **Additivdosierung** | | **30,0** |
| **[% s.o.p.]** | | |

### Formulierung 2 - Pigmentkonzentrate auf Basis Ink Jet Magenta E 02

| **Pos.** | **Rohstoff** | **[g]** |
|---|---|---|
| 1 | VINNOL-Lösung* | 15,0 |
| 2 | Butylglykolacetat | 28,5 |
| 3 | Additiv | 1,5 |
| 4 | Ink Jet Magenta E 02 | 5,0 |
| | | **50,0** |
| | | |
| **Additivdosierung** | | **30,0** |
| **[% s.o.p.]** | | |

### Formulierung 3 - Pigmentkonzentrate auf Basis Irgalite Blue GLVO

| **Pos.** | **Rohstoff** | **[g]** |
|---|---|---|
| 1 | VINNOL-Lösung* | 15,0 |
| 2 | Butylglykolacetat | 27,2 |
| 3 | Additiv | 1,8 |
| 4 | Irgalite Blue GLVO | 6,0 |
| | | **50,0** |
| | | |
| **Additivdosierung** | | **30,0** |
| **[% s.o.p.]** | | |

### Formulierung 4 - Pigmentkonzentrate auf Basis NiPex 90

| **Pos.** | **Rohstoff** | **[g]** |
|---|---|---|
| 1 | VINNOL-Lösung* | 15,0 |
| 2 | Butylglykolacetat | 26,0 |
| 3 | Additiv | 3,0 |
| 4 | NiPex 90 | 6,0 |
| | | **50,0** |
| | | |
| **Additivdosierung** | | **50,0** |
| **[% s.o.p.]** | | |

### Ergebnisse:

### Farbstärke + Transparenz : 1-5 (1= gut; 5= schlecht)

| | Novoperm P-M3R | | | | | | Ink Jet Magenta E02 | | | | | |
|---|---|---|---|---|---|---|---|---|---|---|---|---|
| Additiv | Visko (mPas) | Visko 1 W 40°C (mPas) | Glanz | Haze | Farb= stärke | Trans= parenz | Visko (mPas) | Visko 1 W 40°C (mPas) | Glanz | Haze | Farb= stärke | Trans= parenz |
| EX1* | 19 | 29 | 89 | - | 5 | 4 | 418 | 489 | 91 | - | 4 | 4 |
| E4 | 11 | 14 | 95 | - | 1 | 1 | 309 | 386 | 97 | - | 2 | 2 |
| E7 | 16 | 18 | 92 | - | 2 | 1 | 323 | 396 | 92 | - | 2 | 2 |
| E19 | 13 | 15 | 95 | - | 1 | 2 | 311 | 401 | 93 | - | 2 | 2 |
| | | | | | | | | | | | | |

| | Irgalite Blue | | | | | | NiPex 90 (p.Bk-7, pH= 9,0) | | | | | |
|---|---|---|---|---|---|---|---|---|---|---|---|---|
| Addi-tiv | Visko (mPas) | Visko 1 W 40°C (mPas) | Glanz | Haze | Farb= stärke | Trans= parenz | Visko (mPas) | Visko 1 W 40°C (mPas) | Glanz | Haze | Farb= stärke | Trans= parenz |
| EX1* | 164 | 167 | 92 | - | 3 | 3 | 525 | 885 | 93 | 31 | 3 | - |
| E4 | 103 | 135 | 98 | - | 1 | 1 | 31 | 94 | 99 | 9 | 1 | - |
| E7 | 142 | 148 | 97 | - | 1 | 2 | 174 | 324 | 96 | 21 | 2 | - |
| E19 | 136 | 153 | 98 | - | 2 | 2 | 145 | 214 | 99 | 11 | 1 | - |

| | | | | | | | | | | | | |
|---|---|---|---|---|---|---|---|---|---|---|---|---|
| *: nicht erfindungsgemäß | | | | | | | | | | | | |

### Fazit der Prüfungen in Inkjet-Systemen:

Die besonders gute Qualität der erfindungsgemäßen Polymere zeigt bezüglich der niedrigen Viskosität, der Farbstärke, Transparenz und dem guten Glanz.

Ein besonderer Vorteil der Polymere liegt auch in der besonders guten Einarbeitung in der Bindemittellösung.

### Anwendungstechnische Prüfung in Pigmentkonzentraten:

### Arbeitsgeräte:

Dispermat CV
Trigloss, (Byk Gardner)
Scandex Rüttler

### Stoffe für die anwendungstechnische Prüfung:

| | |
|---|---|
| Flammruß FW200 | → PB 7 |
| Laropoal A81 | → Aldehydharz, Hersteller BASF |
| Paraloid DM 66 | → Thermoplastische Acrylatharz (TPA); Hersteller DOW |
| Macrynal SM 510 | → Acrylatharz 70%ig in; Hersteller Cytec |
| Desmodur N75 | → Aliphatisches Isocyanat, 75% ig in Methoxypropylacetat; Hersteller Bayer |
| Setalux 1756 V V65 | →Acrylatharz 65%ig in Sovent naphtha; Hersteller Nuplex |
| Setamine US 138 0 | → Melaminharz 70%ig in n-Butanol, Hersteller Nuplex |
| Epikote 1001 | → Epoxidharz 75%ig in Xylol, Hersteller Brenntag |
| Aradur 115 | → Polyamidoamin; Hersteller Huntsman |
| Dowanol PMA | → Methoxypropylacetat, Hersteller DOW |
| Dowanol PM | → Methoxypropanol, Hersteller DOW |
| Solvesso 100 | → Aromatisches Lösemittel von Exxon |
| BYK 306/310/325 | → Verlaufsadditive, Hersteller BYK |

### Arbeitsweise:

Herstellung der Pigmentkonzentrate:
- Einwaage der Lackbestandteile in der angegebenen Reihenfolge (nach jeder Zugabe kurz von Hand rühren)
- Dispermat CV / 60 Minuten / 10000 U/min (23m/s) bei 40°C Mahlgut / Glasperlen (0,8-1,2 mm) Verhältnis 1:1 (Gewicht)
- Absieben der Glasperlen nach der Dispergierung
- Visuelle Beurteilung der Viskosität (nach Herstellung nach 1 Tag)

Herstellung der Lacke:
- Einarbeitung der Pigmentkonzentrate über 5 Minuten mit eine ScandexRüttler in die unterschiedlichen Lacksysteme
- Aufguss der verdünnten Lacke auf PE-Folie
- Visuelle Gesamtbewertung hinsichtlich Transparenz und Optik →1-5; (1= gut; 5= schlecht)
- Glanzmessung mit Trigloss

### Formulierung des Pigmentkonzentrates

### 12,5% Ruß mit 80% Additiv fest auf Pigment

| Rohstoffe | [g] |
|---|---|
| Laropal A81 60%ig in Methoxypropylacetat | 54,1 |
| Dowanol PMA | 23,4 |
| Additiv 100%ig | 10,0 |
| Flammruß FW 200 (Pigment Bindemittelverhältnis 1/3,5) | 12,5 |
| | 100,0 |

### Formulierung des Pigmentkonzentrates

### 15% Ruß mit 60% Additiv fest auf Pigment

| Rohstoffe | [g] |
|---|---|
| Laropal A81 60%ig in Methoxypropylacetat | 53,1 |
| Dowanol PMA | 22,9 |
| Additiv 100%ig | 9,0 |
| Flammruß FW 200 (Pigment Bindemittelverhältnis 1/3,5) | 15,0 |
| | 100,0 |

### Formulierungen der Klarlacke mit Auflackung des Pigmentkonzentrates im Klarlack

### TPA

| **Paraloid B 66** | |
|---|---|
| Paraloid B66 (50% in Xylol) | 70,0 |
| Diisodecylphthalat | 2,0 |
| Xylol | 21,8 |
| Dowanol PMA | 6,0 |
| BYK-306 | 0,2 |
| | 100,0 |

| | |
|---|---|
| Klarlack **(Paraloid B66)** | 27.5 |
| Pigmentkonzentrat | 2.5 |
| | 30.0 |

| Einarbeitung des Pigmentkonzentrates auf dem Rüttler | |
|---|---|
| Xylol | 3.0 |

### 2K-PUR

| **Macrynal SM 510 / Desmodur N** | |
|---|---|
| Macrynal SM 510 (70%ig in Butylacetat) | 75,0 |
| Dowanol PMA | 5,0 |
| Solvesso 100 | 5,0 |
| Xylol | 6,9 |
| Butylacetat | 8,0 |
| BYK-306 | 0,1 |
| | 100,0 |

| Härterlösung 2:1 (Gewicht) | |
|---|---|
| Desmodur N 75 | 50,0 |
| Butylacetat | 17,5 |
| Solvesso 100 | 17,5 |
| Dowanol PMA | 5,0 |
| Xylol | 10,0 |
| BYK 306 | 0,1 |
| | 100,0 |

| | |
|---|---|
| Klarlack (Macrynal SM 510/Desmodur N | 20,0 |
| Pigmentkonzentrat | 2,0 |
| | 22,0 |

| Einarbeitung des Pigmentkonzentrates auf dem Rüttler | |
|---|---|
| Härterlösung | 10,0 |

### Acrylat / Melaminsystem

| **Setalux 1756 / Setamine US 138** | |
|---|---|
| Setalux 1756 V V 65 | 60,0 |
| Setamine US 138 | 24,0 |
| Solvesso 100 | 8,0 |
| Xylol | 7,8 |
| BYK-310 | 0,2 |
| | 100,0 |

| | |
|---|---|
| Klarlack **(Setalux 1756** / **Setamine US 138)** | 25,0 |
| Pigmentkonzentrat | 2,0 |
| | 27,0 |

| Einarbeitung des Pigmentkonzentrates auf dem Rüttler | |
|---|---|
| Solvesso 100 | 3.0 |

Der applizierte Lack wird nach 15 Ablüftzeit in 20 Minuten bei 130°C eingebrannt.

### 2K Epoxid

| **Epikote 1001/ Aradur 115 X 70** | |
|---|---|
| Epikote 1001 (75%ig in Xylol) | 60,0 |
| Xylol | 17,0 |
| Dowanol PM | 12,8 |
| n-Butanol | 10,0 |
| BYK- 325 | 0,2 |
| | 100,0 |

| Härterlösung 2:1 (Gewicht) | |
|---|---|
| Aradur 115 X 70 | 35,5 |
| Xylol | 6,0 |
| Dowanol PM | 4,0 |
| n-Butanol | 4,5 |
| | 50,0 |

| | |
|---|---|
| Klarlack **(Epikote 1001 / Aradur 115 X70))** | 20,0 |
| Pigmentkonzentrat | 2,0 |
| | 22,0 |
| Einarbeitung des Pigmentkonzentrates auf dem Rüttler | |
| Härterlösung | 10,0 |

### Ergebnisse:

### Optik im Lacksystem : 1-5 (1= gut; 5= schlecht)

### Viskositä: hv= hochviskos; mv= mittelviskos; nv= niedrigviskos

### Pigmentpasten mit 12,5% Ruß und 80% Additiv fest auf Pigment

| Additiv | Visko der Paste bei Dispergierung, visuell | Visko der Paste nach 1Tag, visuell | **Einbrennlack/Acrylat** | | **Einbrennlack**/**Alkyd** | | **2K-PUR/SM 510** | | **2K-PUR/Set. 1753** | | **2K-Epoxy** | |
|---|---|---|---|---|---|---|---|---|---|---|---|---|
| | | | Optik | Glanz | Optik | Glanz | Optik | Glanz | Optik | Glanz | Optik | Glanz |
| EX1* | hv | sehr hv | 4 | 78 | 3 | 85 | 5 | 79 | 4 | 84 | 5 flokku-liert | 85 |
| EX2* | hv | hv | 4 | 81 | 4 | 83 | 4 | 85 | 3 | 85 | 4 | 82 |
| E2 | mv | mv | 2 | 89 | 2 | 94 | 1 | 90 | 2 | 91 | 2 | 88 |
| E4 | nv | nv | 1 | 86 | 1 | 94 | 1 | 89 | 1 | 92 | 2 | 94 |
| E5 | mv | mv | 1 | 96 | 2 | 89 | 1 | 91 | 2 | 92 | 2 | 98 |
| E8 | nv | nv | 1 | 92 | 2 | 91 | 1 | 94 | 1 | 89 | 1 | 92 |
| E14 | sehr nv | nv | 1 | 94 | 1 | 95 | 1 | 92 | 1 | 93 | 2 | 89 |
| E27 | sehr nv | sehr nv | 1 | 98 | 1 | 96 | 1 | 95 | 1 | 98 | 1 | 95 |

### Pigmentpasten mit 15% Ruß und 60% Additiv fest auf Pigment

| Additiv | Visko der Paste bei Dispergierung, visuell | Visko der Paste nach 1Tag, visuell | **Einbrennlack/Acrylat** | | **Einbrennlack/Alkyd** | | **2K-PUR/SM 510** | | **2K-PUR/Set. 1753** | | **2K-Epoxy** | |
|---|---|---|---|---|---|---|---|---|---|---|---|---|
| | | | Optik | Glanz | Optik | Glanz | Optik | Glanz | Optik | Glanz | Optik | Glanz |
| EX1* | nicht herstellbar | nicht herstellbar | - | - | - | - | - | - | - | - | - | - |
| EX2* | nicht herstellbar | nicht herstell-bar | - | - | - | - | - | - | - | - | - | - |
| E2 | mv | hv | 2 | 87 | 3 | 89 | 3 | 84 | 2 | 90 | 3 | 88 |
| E4 | Nv | mv | 3 | 82 | 2 | 93 | 2 | 87 | 1 | 87 | 2 | 90 |
| E5 | mv | mv | 2 | 89 | 2 | 91 | 3 | 89 | 2 | 86 | 3 | 86 |
| E8 | mv | mv | 2 | 86 | 3 | 89 | 2 | 91 | 2 | 89 | 2 | 89 |
| E14 | Nv | nv | 1 | 94 | 2 | 87 | 1 | 92 | 2 | 91 | 3 | 85 |
| E27 | sehr nv | nv | 1 | 96 | 1 | 95 | 1 | 94 | 1 | 94 | 1 | 91 |

| | | | | | | | | | | | | |
|---|---|---|---|---|---|---|---|---|---|---|---|---|
| *: nicht erfindungsgemäß | | | | | | | | | | | | |

### Fazit der Prüfungen in Pigmentkonzentraten für unterschiedliche Lacksysteme:

Die relevanten Aminaddukte zeichnen durch eine besonders gute Verträglichkeit in den unterschiedlichen Lacksystemen aus. Entsprechende Pigmentpasten sind niedrigviskos und lassen sich vorzüglich einarbeiten. Es ist ohne weiteres möglich, Pigmentpasten mit einem höheren Pigmentgehalt herzustellen. Der hervorragend gute Glanz und die vorzügliche Lagerstabilität der Pigmentkonzentrate sind besonders hervorzuheben.

## Patentansprüche

1. Verfahren zur Herstellung eines Aminaddukts, in welchem die Umsetzung einer Polyaminkomponente (A), einer Polyesterkomponente (B) sowie einer Kohlenwasserstoffkomponente (C) in Gewichtsverhältnissen von
(A): (B) = 1 : 1000 bis 1 : 1 ,
(A) : (C) = 1 : 100 bis 100 : 1 und
(B): (C) = 2 : 1 bis 50 : 1
in der Weise durchgeführt wird, dass gemäß Reaktionsvariante
i) zuerst aus der Polyaminkomponente (A) und der Polyesterkomponente (B) ein Reaktionszwischenprodukt (A-B) entsteht, das anschließend mit der Kohlenwasserstoffkomponente (C) umgesetzt wird oder
gemäß Reaktionsvariante
ii) zuerst aus der Polyaminkomponente (A) und der Kohlenwasserstoffkomponente (C) ein Reaktionszwischenprodukt (A-C) gebildet wird, das nachfolgend mit der Polyesterkomponente (B) umgesetzt wird oder
gemäß Reaktionsvariante
iii) zuerst die Polyaminkomponente (A) gleichzeitig mit der Polyesterkomponente (B) und der Kohlenwasserstoffkomponente (C) zur Reaktion gebracht wird,
wobei
die Polyaminkomponente (A) in Form von organischen Polyaminverbindungen (A') vorliegt, welche jeweils mindestens drei aus primären und sekundären Aminogruppen ausgewählte, jeweils mit der Polyesterkomponente (B) und der Kohlenwasserstoffkomponente (C) reaktionsfähige Aminogruppen (A'+) aufweisen,
die Polyesterkomponente (B) in Form von Polyesterverbindungen (B') vorliegt, die jeweils keine primären Aminogruppen sowie jeweils keine sekundären Aminogruppen enthalten, jeweils mindestens drei Estergruppen aufweisen und jeweils eine als Carboxylgruppe oder Carbonsäureanhydridgruppe vorliegende, mit primären und/oder sekundären Aminogruppen reaktionsfähige Kopplungsgruppe (B'+) enthalten und
die Kohlenwasserstoffkomponente (C) in Form von jeweils eine Verknüpfungsgruppe (C'+) aufweisenden, verzweigten oder unverzweigten, gesättigten oder ungesättigten Kohlenwasserstoffverbindungen (C') vorliegt, die jeweils keine primären Aminogruppen, jeweils keine sekundären Aminogruppen, jeweils keine Carboxylgruppen und jeweils keine Carbonsäureanhydridgruppen enthalten und jeweils ein Gesamtverhältnis bezüglich Kohlenstoffatome zu aus der Gruppe der Elemente O, N, P, S, Si ausgewählte Heteroatome von mindestens 2 : 1 aufweisen, wobei die Verknüpfungsgruppen (C'+) jeweils die Eigenschaft aufweisen, mit primären Aminogruppen unter Entstehung von sekundären Aminogruppen und/oder mit sekundären Aminogruppen unter Bildung von tertiären Aminogruppen zu reagieren und außerdem jeweils vorliegen
in Form einer Epoxidfunktion der allgemeinen Formel (I) 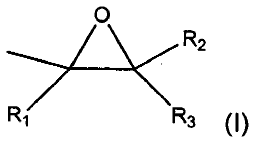 mit R₁, R₂ und R₃ jeweils gleich oder verschieden sowie jeweils unabhängig voneinander repräsentiert durch H und/ oder durch einen gesättigten, verzweigten oder unverzweigten C₁-C₁₂-Kohlenwasserstoffrest,
wobei das Aminaddukt bei Raumtemperatur jeweils in fester Form anfällt sowie einen Schmelzbereich von 30 bis 200 °C aufweist und die Umsetzung der Polyaminkomponente (A), der Polyesterkomponente (B) sowie der Kohlenwasserstoffkomponente (C) derart erfolgt, dass pro Gewichtseinheit Polyesterkomponente (B) maximal 0,8 Gewichtseinheiten anderer Komponenten anwesend sind, die keiner der Komponenten (A), (B) oder (C) zugehörig sind.

2. Verfahren nach Anspruch 1, **dadurch gekennzeichnet, dass** die Umsetzung von (A), (B) sowie (C) in Gewichtsverhältnissen von
(A): (B) = 1 : 100 bis 1 : 4, bevorzugt (A): (B) = 1 : 25 bis 1 : 7 und
(A): (C) = 1:10 bis 10:1, bevorzugt (A): (C) = 1 : 2 bis 2 : 1
durchgeführt wird.

3. Verfahren nach Anspruch 1 oder 2, **dadurch gekennzeichnet, dass** die Umsetzung der Polyaminkomponente (A), der Polyesterkomponente (B) sowie der Kohlenwasserstoffkomponente (C) derart erfolgt, dass pro Gewichtseinheit Polyesterkomponente (B) maximal 0,2 Gewichtseinheiten anderer Komponenten anwesend sind, die keiner der Komponenten (A), (B) oder (C) zugehörig sind.

4. Verfahren nach einem der Ansprüche 1 bis 3, **dadurch gekennzeichnet, dass** die Umsetzung der Polyaminkomponente (A), der Polyesterkomponente (B) sowie der Kohlenwasserstoffkomponente (C) in Abwesenheit von organischen Lösemitteln erfolgt.

5. Verfahren nach einem der Ansprüche 1 bis 4, **dadurch gekennzeichnet, dass** mindestens 50 Gew.-%, bevorzugt 70 bis 100 Gew.%, der eingesetzten Polyesterverbindungen (B') in Form von linearen, monocarboxyfunktionellen Caprolactonpolyestern vorliegen, welche bevorzugt jeweils ein gewichtsmittleres Molekulargewicht von 500 bis 10.000, bevorzugt von 800 bis 8.000 aufweisen.

6. Verfahren nach einem der Ansprüche 1 bis 5, **dadurch gekennzeichnet, dass** die Kohlenwasserstoffkomponente (C) mindestens 30 Gew. %, bevorzugt 50 bis 100 Gew. %, ungesättigte C₆-C₅₀-Kohlenwasserstoffverbindungen (C') enthält, welche jeweils mindestens eine Aryl- und/oder Alkylarylgruppe, enthalten.

7. Verfahren nach einem der Ansprüche 1 bis 6, **dadurch gekennzeichnet, dass** die Kohlenwasserstoffkomponente (C) mindestens 30 Gew. %, bevorzugt 50 bis 100 Gew. %, C₁₀-C₇₀-Kohlenwasserstoffverbindungen (C') enthält, welche jeweils mindestens einen verzweigten Alkyl- und/ oder einen verzweigten Alkenylrest enthalten.

8. Verfahren nach einem der Ansprüche 1 bis 7, **dadurch gekennzeichnet, dass** die Komponenten (A) (B) und (C) in jeweils solchen stöchiometrischen Verhältnissen eingesetzt werden, dass insgesamt mindestens 50 Mol-%, bevorzugt 70 bis 100 Mol-% der Gesamtheit der reaktionsfähigen Aminogruppen (A'+) der eingesetzten Polyaminverbindungen (A') mit den Polyesterverbindungen (B') und/ oder mit den Kohlenwasserstoffverbindungen (C'), umgesetzt werden.

9. Verfahren nach einem der Ansprüche 1 bis 8, **dadurch gekennzeichnet, dass** die Polyesterkomponente (B) und die Kohlenwasserstoffkomponente (C) bei den Reaktionsbedingungen der Umsetzung nicht miteinander reagieren.

10. Verwendung eines festen Aminaddukts, welches gemäß dem Verfahren nach einem der Ansprüche 1 bis 9 hergestellt worden ist, für Applikationen, für die ausschließlich feste Additive eingesetzt werden können, wobei diese Applikationen vorliegen in Form von Anwendungen zur Thermoplastverarbeitung, Pulverlackanwendungen, Duroplastanwendungen, Toneranwendungen oder Anwendungen für feste Pigmentpräparationen.

## Claims

1. Process for producing an amine adduct, in which the conversion of a polyamine component (A), a polyester component (B) and a hydrocarbon component (C) is carried out in weight proportions of
(A): (B) = 1: 1000 to 1: 1,
(A): (C) = 1: 100 to 100: 1 and
(B): (C) = 2: 1 to 50: 1
such that, according to reaction variant
i) an intermediate reaction product (A-B) is first produced from the polyamine component (A) and the polyester component (B) and is then converted with the hydrocarbon component (C) or
according to reaction variant
ii) an intermediate reaction product (A-C) is first formed from the polyamine component (A) and the hydrocarbon component (C), which is subsequently converted with the polyester component (B) or
according to reaction variant
iii) first the polyamine component (A) is simultaneously reacted with the polyester component (B) and the hydrocarbon component (C),
wherein
the polyamine component (A) is present in the form of organic polyamine compounds (A'), which respectively have at least three reactive amino groups (A'+) selected from at least primary and secondary amino groups, respectively reactive with the polyester component (B) and the hydrocarbon component (C),
the polyester component (B) is present in the form of polyester compounds (B') which respectively contain no primary amino groups and respectively no secondary amino groups, respectively at least three ester groups and respectively a reactive linkage group (B'+), present as carboxyl group or carboxylic acid anhydride group, with primary and/or secondary amino groups, and
the hydrocarbon component (C) is present in the form of branched or unbranched, saturated or unsaturated hydrocarbon compounds (C') respectively having a link group (C'+), which respectively contain no primary amino groups, respectively no secondary amino groups, respectively no carboxyl groups and respectively no carboxylic acid anhydride groups and respectively have an overall ratio relating to carbon atoms to heteroatoms selected from the group of elements O, N, P, S, Si of at least 2: 1, wherein the link groups (C'+) respectively have the property of reacting with primary amino groups to form secondary amino groups and/or with secondary amino groups to form tertiary amino groups and also are respectively present
in the form of an epoxy functional group of the general formula (I) 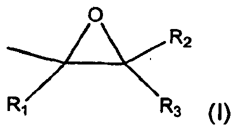 R₁, R₂, R₃ respectively the same or different as well as independent of one another represented by H and/or a saturated, branched or unbranched C₁-C₁₂ hydrocarbon radical,
wherein the amine adduct precipitates at room temperature respectively in solid form and has a melting range of 30 to 200°C and the conversion of the polyamine component (A), the polyester component (B) and the hydrocarbon component (C) takes place such that, per weight unit polyester component (B), a maximum of 0.8 weight units of other components are present that are related to none of the components (A), (B) or (C).

2. Process in accordance with claim 1, **characterised in that** the conversion of (A), (B) and (C) is carried out in weight ratios of
(A): (B) = 1: 100 to 1: 4, preferably (A): (B) = 1: 25 to 1: 7 and
(A): (C) = 1:10 to 10:1, preferably (A): (C) = 1: 2 to 2: 1

3. Process in accordance with claims 1 or 2, **characterised in that** the conversion of the polyamine component (A), the polyester component (B) and the hydrocarbon component (C) takes place such that, per weight unit of the polyester component (B), a maximum of 0.2 weight units of other components are present that are related to none of the components (A), (B) or (C).

4. Process in accordance with one of the applications 1 to 3, **characterised in that** the conversion of the polyamine component (A), der polyester component (B) and the hydrocarbon component (C) takes place in the absence of organic solvents.

5. Process in accordance with one of the applications 1 to 4, **characterised in that** at least 50 wt. %, preferably 70 to 100 wt.% of the polyester compounds (B') are present in the form of linear, monocarboxy-functional caprolactone polyesters, which preferably respectively have a weight average molecular weight of 500 to 10,000, preferably of 800 to 8,000.

6. Process in accordance with one of the applications 1 to 5, **characterised in that** the hydrocarbon component (C) contains at least 30 wt. %, preferably 50 to 100 wt. %, unsaturated C₆-C₅₀ hydrocarbon compounds (C'), which respectively contain at least one aryl and/or alkylaryl group.

7. Process in accordance with one of the applications 1 to 6, **characterised in that** the hydrocarbon component (C) contains at least 30 wt. %, preferably 50 to 100 wt. %, C₁₀ -C₇₀ hydrocarbon compounds (C'), which respectively contain at least one branched alkyl- and/or one branched alkene radical.

8. Process in accordance with one of the applications 1 to 7, **characterised in that** the components (A) (B) and (C) are used respectively in such stoichiometric ratios that overall at least 50 mol-%, preferably 70 to 100 mol-% of the totality of reactive amino groups (A'+) of the polyamine compounds (A') are converted with the polyester compounds (B') and/or with the hydrocarbon compounds (C').

9. Process in accordance with one of the applications 1 to 8, **characterised in that** the polyester component (B) und the hydrocarbon component (C) do not react with one another under the reaction conditions of the conversion.

10. Use of a solid amine adduct which has been produced by the process according to one of the claims 1 to 9 for applications, for which exclusively solid additives can be used, wherein these applications exist in the form of applications for thermoplastic processing, powder coating applications, thermosetting plastics applications, toner applications or applications or application for solid pigment preparations.

## Revendications

1. Procédé de préparation d'un produit d'addition d'amine, dans lequel la réaction d'un composant polyamine (A), d'un composant polyester (B) et d'un composant hydrocarboné (C) est mise en oeuvre selon les rapports pondéraux suivants
(A) : (B) = 1 : 1000 à 1 : 1,
(A) : (C) = 1 : 100 à 100 : 1 et
(B) : (C) = 2 : 1 à 50 : 1
d'une façon telle que, selon la variante de réaction
i) il résulte d'abord un produit de réaction intermédiaire (A-B) du composant polyamine (A) et du composant polyester (B), qui est mis en réaction ensuite avec le composant hydrocarboné (C) ou
selon la variante de réaction
ii) il est formé d'abord un produit de réaction intermédiaire (A-C) à partir du composant polyamine (A) et du composant hydrocarboné (C), qui est mis en réaction ensuite avec le composant polyester (B) ou
selon la variante de réaction
iii) il est mis en réaction d'abord le composant polyamine (A) simultanément avec le composant polyester (B) et le composant hydrocarboné (C),
où
le composant polyamine (A) se présente sous la forme de composés polyamine (A') organiques dont chacun comporte au moins trois groupes amine (A'+) choisis parmi des groupes amines primaires et secondaires respectivement aptes à réagir avec le composant polyester (B) et le composant hydrocarboné (C),
le composant polyester (B) se présente sous la forme de composés polyester (B') dont chacun ne comporte ni de groupes amines primaires ni de groupes amines secondaires, dont chacun comporte trois groupes ester et dont chacun comporte un groupe de liaison (B'+) apte à réagir avec des groupes amines primaires et/ou secondaires et se présentant comme groupe carboxyle ou groupe anhydride d'acide carboxylique, et
le composant hydrocarboné (C) se présente sous la forme de composés hydrocarbonés (C') ramifiés ou non ramifiés, saturés ou insaturés et comportant chacun un groupe de liaison (C'+), chacun des composés ne comportant ni de groupes amines primaires ni de groupes amines secondaires, ni de groupe carboxyle et ni de groupe anhydride d'acide carboxylique, et chacun présentant, par rapport aux atomes de carbone, un rapport total d'hétéroatomes choisis dans le groupe d'éléments O, N, P, S, Si d'au moins 2 : 1, les groupes de liaison (C'+) présentant chacun la caractéristique de réagir avec des groupes amines primaires en formant des groupes amines secondaires et/ou avec des groupes amines secondaires en formant des groupes amines tertiaires, et se présentant en outre chacun
sous la forme d'une fonction d'époxyde de la formule générale (I) 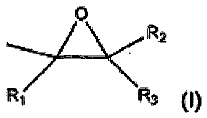 avec
R₁, R₂ et R₃ identiques ou différents et représentés indépendamment les uns des autres par H et/ou un radical hydrocarboné en C₁-C₁₂ saturé, et ramifié ou non ramifié,
le produit d'addition d'amine étant obtenu chaque fois, à température ambiante, sous une forme solide et présente un intervalle de températures de fusion de 30 à 200 °C, la réaction du composant polyamine (A), du composant polyester (B) et du composant hydrocarboné (C) étant effectuée de façon que, par unité de poids du composant polyester (B), un maximum de 0,8 unité de poids d'autres composants, qui n'appartiennent à aucun des composants (A), (B) ou (C), est présent.

2. Procédé selon la revendication 1, **caractérisé en ce que** la réaction de (A), (B) et (C) est effectuée selon les rapports pondéraux suivants
(A) : (B) = 1 : 100 à 1 : 4, de préférence (A) : (B) = 1 : 25 à 1 : 7 et
(A) : (C) = 1 : 10 à 10 : 1, de préférence (A) : (C) = 1 : 2 à 2 : 1.

3. Procédé selon la revendication 1 ou 2, **caractérisé en ce que** la réaction du composant polyamine (A), du composant polyester (B) et du composant hydrocarboné (C) est effectuée de façon que, par unité de poids du composant polyester (B), un maximum de 0,2 unité de poids d'autres composants, qui n'appartiennent à aucun des composants (A), (B) ou (C), est présent.

4. Procédé selon l'une des revendications 1 à 3, **caractérisé en ce que** la réaction du composant polyamine (A), du composant polyester (B) et du composant hydrocarboné (C) est effectuée en l'absence de solvants organiques.

5. Procédé selon l'une des revendications 1 à 4, **caractérisé en ce qu'**au moins 50 % en poids, de préférence 70 à 100 % en poids, des composés polyester (B') utilisés se présentent sous la forme de polyesters de caprolactone monocarboxy-fonctionnels linéaires qui ont de préférence un poids molaire moyen en poids de 500 à 10000, de préférence de 800 à 8000.

6. Procédé selon l'une des revendications 1 à 5, **caractérisé en ce que** le composant hydrocarboné (C) comporte au moins 30 % en poids, de préférence 50 à 100 % en poids, de composés hydrocarbonés insaturés en C₆-C₅₀ (C') qui comportent chacun au moins un groupe aryle et/ou un groupe alkylaryle.

7. Procédé selon l'une des revendications 1 à 6, **caractérisé en ce que** le composant hydrocarboné (C) comporte au moins 30 % en poids, de préférence 50 à 100 % en poids, de composés hydrocarbonés en C₁₀-C₅₀ (C') qui comportent chacun au moins un radical alkyle ramifié et/ou un radical alcényle ramifié.

8. Procédé selon l'une des revendications 1 à 7, **caractérisé en ce que** les composants (A), (B) et (C) sont utilisés selon des rapports stoechiométriques tels que, au total, au moins 50 % mol, de préférence 70 à 100 % mol, de l'ensemble des groupes amine (A'+) réactifs des composés polyamine (A') utilisés, sont mis en réaction avec les composés polyester (B') et/ou les composés hydrocarbonés (C').

9. Procédé selon l'une des revendications 1 à 8, **caractérisé en ce que** le composant polyester (B) et le composant hydrocarboné (C) ne réagissent pas l'un avec l'autre dans les conditions réactionnelles de la transformation.

10. Utilisation d'un produit d'addition d'amine solide, qui a été obtenu selon le procédé de l'une des revendications 1 à 9, pour des applications pour lesquelles uniquement des produits d'addition solides peuvent être utilisés, les applications se présentant sous la forme d'applications pour la transformation de thermodurcissables, d'applications de vernis en poudre, d'applications de duroplastes, d'applications de toners ou d'applications pour des préparations solides de pigments.
